(19) **Europäisches Patentamt**
**European Patent Office**
**Office européen des brevets**

(11) **EP 3 864 633 B1**

(12) **EUROPÄISCHE PATENTSCHRIFT**

(45) Veröffentlichungstag und Bekanntmachung des Hinweises auf die Patenterteilung:
**31.05.2023   Patentblatt 2023/22**

(21) Anmeldenummer: **19779494.4**

(22) Anmeldetag: **03.10.2019**

(51) Internationale Patentklassifikation (IPC):
**G07C 9/00** *(2020.01)*

(52) Gemeinsame Patentklassifikation (CPC):
**G07C 9/28;** G07C 9/00309; G07C 2009/00793;
G07C 2209/08; G07C 2209/63

(86) Internationale Anmeldenummer:
**PCT/EP2019/076814**

(87) Internationale Veröffentlichungsnummer:
**WO 2020/074359 (16.04.2020 Gazette 2020/16)**

(54) **ZUGANGSKONTROLLSYSTEM UND VERFAHREN ZUM BETREIBEN EINES ZUGANGSKONTROLLSYSTEMS**

ACCESS CONTROL SYSTEM AND METHOD FOR OPERATING SAME

SYSTÈME DE CONTRÔLE D'ACCÈS ET PROCÉDÉ DE FONCTIONNEMENT D'UN SYSTÈME DE CONTRÔLE D'ACCÈS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.10.2018   EP 18200002**

(43) Veröffentlichungstag der Anmeldung:
**18.08.2021   Patentblatt 2021/33**

(73) Patentinhaber: **INVENTIO AG**
**6052 Hergiswil (CH)**

(72) Erfinder:
• **TROESCH, Florian**
**8703 Erlenbach (CH)**
• **WITTNEBEN, Armin**
**8044 Zürich (CH)**
• **DUMPHART, Gregor**
**8044 Zürich (CH)**
• **KUHN, Marc**
**8044 Gockhausen (CH)**

(74) Vertreter: **Inventio AG**
**Seestrasse 55**
**6052 Hergiswil (CH)**

(56) Entgegenhaltungen:
EP-A1- 3 370 464    WO-A1-2015/135630
WO-A1-2016/198548    WO-A1-2017/100706

**EP 3 864 633 B1**

**Beschreibung**

Die hier beschriebene Technologie betrifft allgemein ein Zugangskontrollsystem, das einem berechtigten Nutzer Zugang zu einer zugangsbeschränkten Zone in einem Gebäude gewährt. Ausführungsbeispiele der Technologie betreffen insbesondere ein Zugangskontrollsystem mit einer Sende- und Empfangseinrichtung für Funksignale und ein Verfahren zum Betreiben eines solchen Zugangskontrollsystems.

Zugangskontrollsysteme können auf verschiedenste Art und Weise ausgestaltet sein. Die Ausgestaltungen können beispielsweise die Art betreffen, wie sich Nutzer (Personen) als zugangsberechtigt auszuweisen haben, z. B. mit einem Schlüssel, einer Magnet-, Chip- oder RFID Karte oder einem mobilen elektronischen Gerät (z. B. Mobiltelefon). WO 2010/112586 A1 beschreibt ein Zugangskontrollsystem, bei dem ein von einem Nutzer mitgeführtes Mobiltelefon einen Identifikationscode an einen Zugangsknoten sendet. Falls der Identifikationscode als gültig erkannt wird, sendet der Zugangsknoten einen Zugangscode an das Mobiltelefon, das den Zugangscode auf einer Anzeige dargestellt. Hält der Nutzer das Mobiltelefon an eine Kamera, so dass diese den dargestellten Zugangscode erfassen kann, überprüft das Zugangskontrollsystem, ob der erfasste Zugangscode gültig ist. Ist er gültig, wird dem Nutzer der Zugang gewährt.

EP 3 370 464 A1 offenbart ein Protokoll zum Messen eines kürzesten Abstands zwischen einer Gruppe von Funkankern und einer Gruppe von UWB Funk-Tags. Ein Verarbeitungsmodul eines Funkempfangsgeräts ist ausgestaltet, eine Phasendifferenz eines Signals zwischen einer ersten und einer zweiten Antenne und, basierend auf einem bekannten Abstand der ersten Antenne relativ zur zweiten Antenne, einen Ankunftswinkel des Signals relativ zum Empfänger zu bestimmen.

WO 2017/100706 A1 offenbart eine Vorrichtung zum Erfassen von Ereignissen, deren Prozessor Funkkanalzustandsinformationen (CSI) klassiert. Das Training des Klassifikators umfasst für jedes der zu erkennenden bekannten Ereignisse während eines Zeitraums ein Erhalten einer Trainings-CSI eines Mehrwegefunkkanals zwischen einem Funksender und einem Funkempfänger am festgelegten Ort. Die Trainings-CSI wird von einem oder mehreren Sondierungssignalen abgeleitet wird, die vom Sender über den Mehrwegefunkkanal an den Empfänger gesendet werden. Der Klassifikator wird basierend auf den bekannten Ereignissen und der jedem der Ereignisse zugeordneten Trainings-CSI trainiert.

WO 2016/198548 A1 offenbart ein Aufzugssystem, bei dem ein Zielruf automatisch erzeugt wird, wenn erkannte momentane Funkverbindungsdaten einem gespeicherten Verhaltensmuster mit einer Nutzung des Aufzugsystems entsprechen. Dafür werden Funkverbindungen zwischen Sensoren und einem Mobilfunkgerät eines Passagiers erkannt und registriert.

WO 2015/135630 A1 beschreibt eine Vorrichtung zum Bestimmen einer Ankunftszeit eines Nachrichtensignals. Ein Quadraturmischer mischt ein empfangenes Nachrichtensignal mit dem Signal eines lokalen Oszillators, wobei das empfangene Nachrichtensignal eine binäre Sequenz umfasst, die durch binäre Frequenzumtastung moduliert ist. Ein Ankunftszeitdetektor bestimmt die Ankunftszeit des Nachrichtensignals auf der Grundlage der Ausgabe des Quadraturmischers.

In Gebäuden mit vielen Stockwerken kann es zu bestimmten Tageszeiten zu einem hohen Personenverkehrsaufkommen kommen, beispielsweise in einer Eingangshalle eines Bürogebäudes, wenn morgens oder nach einer Mittagspause eine Vielzahl von Arbeitnehmern das Gebäude betritt, um zu ihren Arbeitsplätzen zu gelangen. Zu diesen Zeiten werden nicht nur hohe Anforderungen an die Effizienz eines im Gebäude installierten Aufzugssystems gestellt, sondern auch an das Zugangskontrollsystem, um z. B. Schlangenbildung vor einem Zugang so weit wie möglich zu vermeiden. Es besteht daher ein Bedarf an einem Zugangskontrollsystem, das diese Anforderungen erfüllt, wobei die Zugangskontrolle trotzdem zugangsberechtigte Personen zuverlässig von nicht berechtigten Personen unterscheiden kann.

Ein Aspekt einer solchen Technologie betrifft ein Verfahren zum Betreiben eines Systems zur Kontrolle eines Zugangs zu einer zugangsbeschränkten Zone in einem Gebäude. Das System umfasst eine Steuereinrichtung, eine ortsfeste Sendeeinrichtung für ein erstes Funksignal, eine Empfangseinrichtung für Funksignale und eine mit der Empfangseinrichtung kommunikativ verbundene Signalverarbeitungseinrichtung. Beim Verfahren wird durch die Signalverarbeitungseinrichtung eine erste Kanalimpulsantwort basierend auf dem durch die Empfangseinrichtung empfangenen ersten Funksignal bestimmt. Durch die Signalverarbeitungseinrichtung wird zudem eine zweite Kanalimpulsantwort basierend auf einem durch die Empfangseinrichtung empfangen zweiten Funksignal bestimmt. Das zweite Funksignal wird von einem ersten mobilen elektronischen Gerät eines ersten Nutzers gesendet. Durch die Signalverarbeitungseinrichtung wird ausserdem ein Ähnlichkeitsgrad mittels einer Auswertung der ersten Kanalimpulsantwort und der zweiten Kanalimpulsantwort bestimmt. Der Ähnlichkeitsgrad gibt an, wie ähnlich die erste Kanalimpulsantwort und die zweite Kanalimpulsantwort zueinander sind. Wenn basierend auf dem Ähnlichkeitsgrad eine festgelegte Regel erfüllt ist, wird durch die Steuereinrichtung eine Gebäudeaktion veranlasst. Die Funksignale haben eine Bandbreite von mindestens 500 MHz und werden gemäss einem WLAN/WiFi Standard oder einem Standard für eine Ultra-Breitband Technologie gesendet und empfangen.

Ein anderer Aspekt der Technologie betrifft ein System zur Kontrolle eines Zugangs zu einer zugangsbeschränkten Zone in einem Gebäude. Das System umfasst eine Sendeeinrichtung zum Senden eines ersten Funksignals, eine Empfangseinrichtung für Funksignale, eine Steuereinrichtung und eine Signalverarbeitungseinrichtung, die mit der Empfangseinrichtung und der Steuereinrichtung kommunikativ verbunden ist. Die Signalverarbeitungseinrichtung bestimmt eine erste Kanalimpulsantwort basierend auf einem durch die Empfangseinrichtung empfangenen ersten Funksignal und eine zweite Kanalimpulsantwort basierend auf einem durch die Empfangseinrichtung empfangen zweiten Funksignal. Das zweite Funksignal wird von einem ersten mobilen elektronischen Gerät eines ersten Nutzers gesendet. Die Signalverarbeitungseinrichtung bestimmt ausserdem einen Ähnlichkeitsgrad mittels einer Auswertung der ersten Kanalimpulsantwort und der zweiten Kanalimpulsantwort. Der Ähnlichkeitsgrad gibt an, wie ähnlich die erste Kanalimpulsantwort und die zweite Kanalimpulsantwort zueinander sind. Die Steuereinrichtung veranlasst eine Gebäudeaktion, wenn basierend auf dem Ähnlichkeitsgrad eine festgelegte Regel erfüllt ist. Die Funksignale haben eine Bandbreite von mindestens 500 MHz und werden gemäss einem WLAN/WiFi Standard oder einem Standard für eine Ultra-Breitband Technologie gesendet und empfangen.

Die hier beschriebene Technologie schafft ein Zugangskontrollsystem, das aufgrund einer Auswertung der Funksignale erkennt, dass sich ein Nutzer nicht nur im Gebäude aufhält, sondern auch tatsächlich eine bestimmte Gebäudeaktion wünscht. Dies erfolgt für den Nutzer auf komfortable Weise, weil der Nutzer beispielsweise nicht mit dem mobilen elektronischen Gerät hantieren muss. Neben einem solchen für einen Nutzer wahrnehmbaren Vorteil, bietet die hier beschriebene Technologie zudem wesentliche technische Vorteile.

Der Ähnlichkeitsgrad basiert gemäss der hier beschriebenen Technologie auf einer Auswertung der Kanalimpulsantworten. Aus der ersten Kanalimpulsantwort wird eine erste Folge von zeitlich aufeinanderfolgenden ersten Mehrwege-Signalkomponenten ermittelt, und aus der zweiten Kanalimpulsantwort wird eine zweite Folge von zeitlich aufeinanderfolgenden zweiten Mehrwege-Signalkomponenten ermittelt. Die Auswertung der ersten und zweiten Kanalimpulsantworten umfasst ein paarweises Vergleichen, in einem Ausführungsbeispiel gemäss der Reihenfolge in der ersten und zweiten Folge, einer jeden zweiten Mehrwege-Signalkomponente mit ihrer, der Reihenfolge entsprechenden ersten Mehrwege-Signalkomponente. Daraus wird für jedes Paar eine zeitliche Abweichung bestimmt, sodass eine maximale zeitliche Abweichung und eine minimale zeitliche Abweichung vorliegen, wobei eine Definition des Ähnlichkeitsgrads auf mindestens einer dieser zeitlichen Abweichungen basiert. Die hier beschriebene Technologie nutzt somit gezielt die oft als nachteilig angesehene Mehrwege-Signalausbreitung.

Da die Mehrwege-Signalausbreitung gezielt genutzt wird, ist die hier beschriebene Technologie auch dann einsetzbar, wenn keine Sichtverbindung zur Empfangseinrichtung besteht. Die hier beschriebene Technologie ist daher auch für den Einsatz in Gebäuden geeignet, in denen eine hohe Nutzerdichte vorkommen kann. Eine solche Nutzerdichte kann sich beispielsweise bei hohem Verkehrsaufkommen in einer Eingangshalle eines Bürogebäudes oder Hotels ergeben.

Bei der hier beschriebenen Technologie ist es ausserdem ein Vorteil, dass sie sowohl bei synchronen als auch asynchronen Funksignalen eingesetzt werden kann. In einem Ausführungsbeispiel für eine synchrone Situation haben das erste Funksignal und das zweite Funksignal eine gemeinsame Zeitreferenz. Ein erster Abstand, den das erste mobile elektronische Gerät des ersten Nutzers von der Sendeeinrichtung hat, wird gemäss

$$d_1 = E_S \cdot c \cdot SD_S,$$

ermittelt, dabei sind: c die Lichtgeschwindigkeit, $E_S = (K + 1)/K$ (Korrekturfaktor) und $SD_S = \max\{|\Delta_1|, ..., |\Delta_K|\}$ (Ähnlichkeitsgrad bei synchroner Situation). Wenn der erste Abstand kleiner oder gleich einem festgelegten Mindestabstand ist, dann wird die Gebäudeaktion veranlasst.

In einem Ausführungsbeispiel für eine asynchrone Situation haben das erste Funksignal und das zweite Funksignal keine gemeinsame Zeitreferenz. Ein erster Abstand, den das erste mobile elektronische Gerät des ersten Nutzers von der Sendeeinrichtung hat, wird gemäss

$$d_1 = E_A \cdot c/2 \cdot SD_A,$$

ermittelt, dabei sind: c die Lichtgeschwindigkeit, $E_A = (K + 1)/(K - 1)$ (Korrekturfaktor) und $SD_A = (\max\{\Delta_1, ..., \Delta_K\} - \min\{Ai, ..., \Delta_K\})$ (Ähnlichkeitsgrad bei asynchroner Situation). Wenn der erste Abstand kleiner oder gleich einem festgelegten Mindestabstand ist, dann wird die Gebäudeaktion veranlasst.

Wie oben erwähnt, ist die hier beschriebene Technologie auch bei mehr als einem Nutzer einsetzbar, beispielsweise bei hohem Verkehrsaufkommen. In einer solchen Situation empfängt die Empfangseinrichtung eine Anzahl von weiteren Funksignalen, die von einer Anzahl von weiteren mobilen elektronischen Geräten ausgesendet werden. Basierend auf jedem empfangenen weiteren Funksignal wird eine Kanalimpulsantwort bestimmt, die in Verbindung mit der ersten Kanalimpulsantwort ausgewertet wird, um einen Abstand des entsprechenden weiteren mobilen elektronischen Geräts zur Sendeeinrichtung zu ermitteln. Für jeden ermittelten Abstand wird geprüft, ob er kleiner oder gleich dem festgelegten Mindestabstand ist. Damit kann auch in Situationen mit mehr als einem Nutzer derjenige Nutzer erkannt werden, der sich am nächsten zur Sendeeinrichtung befindet.

Wenn in einer Situation mit mehreren Nutzern einer der ermittelten Abstände kleiner oder gleich dem festgelegten Mindestabstand ist, wird für den Nutzer des entsprechenden mobilen elektronischen Geräts, dem eine entsprechende Kanalimpulsantwort zugeordnet ist, die Gebäudeaktion veranlasst. In einer solchen Situation kann es u. U. vorkommen, dass ein berechtigter oder unberechtigter Nutzer versucht, sich dem Nutzer, für den zu diesem Zeitpunkt die Gebäudeaktion veranlasst wird, anzuschliessen und so in die zugangsbeschränkte Zone zu gelangen. Die hier beschriebene Technologie kann auch eingesetzt werden, um eine solche Drängler-Situation zu erkennen. Dafür wird mindestens ein weiterer Ähnlichkeitsgrad basierend auf der entsprechenden Kanalimpulsantwort und einer Kanalimpulsantwort, die einem Funksignal eines weiteren mobilen elektronischen Geräts zugeordnet ist, bestimmt. Ausgehend davon wird ein Geräteabstand zwischen dem entsprechenden mobilen elektronischen Gerät und dem weiteren mobilen elektronischen Gerät ermittelt. Wenn der Geräteabstand kleiner oder gleich einem festgelegten Geräteabstand ist, wird eine Sicherheitsmassnahme veranlasst. Die Sicherheitsmassnahme kann ein Auslösen eines Alarms und/oder ein Alarmieren von Sicherheitspersonal umfassen.

In Situationen mit mehreren Nutzern können einige oder alle dieser Nutzer zusammengehören und als solche eine Gruppe bilden. Die hier beschriebene Technologie ermöglicht auch das Erkennen einer solchen Gruppe. Dafür werden Kanalimpulsantworten ausgewertet, die jeweils einem Funksignal eines weiteren mobilen elektronischen Geräts zugeordnet sind, wobei das Auswerten ein paarweises Berechnen von Ähnlichkeitsgraden umfasst, um Abstände zwischen den mobilen elektronischen Geräten zu ermitteln. Die Abstände werden mit einem festgelegten Nutzerabstand verglichen. Wenn die mobilen elektronischen Geräte jeweils einen Abstand voneinander haben, der kleiner oder gleich dem festgelegten Nutzerabstand ist, dann werden die entsprechenden Nutzer einer zusammengehörigen Gruppe zugeordnet. Auch in diesem Fall kann z. B. Sicherheitspersonal alarmiert werden, um die Nutzer dieser Gruppe beispielsweise gemeinsam durch den Zugang zu schleusen, um so die Gruppe zusammenzuhalten und Verzögerungen so gering wie möglich zu halten.

Die hier beschriebene Technologie kann auch in Verbindung mit einem Algorithmus für Maschinelles Lernen verwendet werden. Unter anderem dafür hat die Signalverarbeitungseinrichtung eine Speichereinrichtung, in der eine Messdatenbank und ein Computerprogramm gespeichert sind. Die Messdatenbank speichert einen in einer Trainingsphase bestimmten Datensatz, der eine Vielzahl von gemessenen Abständen eines mobilen elektronischen Geräts von der Sendeeinrichtung und für jeden der gemessenen Abstände gemessene Kanalimpulsantworten umfasst. Das Computerprogramm führt in der Trainingsphase einen Algorithmus für Maschinelles Lernen aus, um aus den Datensätzen eine Funktion zu ermitteln, die die gemessenen Kanalimpulsantworten auf die gemessenen Abstände abbildet.

In einer Anwendungsphase wird die in der Trainingsphase ermittelte Funktion auf die ersten und zweiten Kanalimpulsantworten angewendet, um daraus einen Abstand des mobilen elektronischen Geräts von der Sendeeinrichtung zu ermitteln.

In der hier beschriebenen Technologie können bekannte Standards für Funkkommunikation angewendet werden. Die Funksignale haben eine Bandbreite von mindestens 500 MHz und werden gemäss einem WLAN/WiFi Standard oder einem Standard für eine Ultra-Breitband Technologie gesendet und empfangen. Beispiele solcher Standards sind an anderer Stelle dieser Beschreibung angegeben.

In einem Ausführungsbeispiel wird zur Ermittlung der Gebäudeaktion eine erste Kennung genutzt. Wenn der erste Nutzer zugangsberechtigt ist, ist die erste Kennung einem Nutzerprofil zugeordnet, in dem eine nutzerspezifische Gebäudeaktion gespeichert ist. Die erste Kennung wird in Verbindung mit dem zweiten Funksignal ermittelt. Die Gebäudeaktion kann beispielsweise darin bestehen, für den Nutzer einen Aufzugsruf (Zielruf) zu veranlassen oder Türen oder andere Barrieren freizugeben, an denen dieser Nutzer zugangsberechtigt ist.

Ein weiterer Vorteil der hier beschriebenen Technologie ist, dass die Sendeeinrichtung einen eingeschränkten Funktionsumfang mit geringer Komplexität hat; in einem Ausführungsbeispiel ist der Funktionsumfang auf ein periodisches Senden einer breitbandigen Trainingssequenz und der Kennung beschränkt. Die Sendeeinrichtung ist daher relativ kostengünstig. Sollen in einer Zone mehrere Sendeeinrichtungen angeordnet werden, um z. B. die Genauigkeit der Abstandsbestimmung zu verbessern, kann dies ebenfalls relativ kostengünstig erfolgen.

Im Folgenden sind verschiedene Aspekte der verbesserten Technologie anhand von Ausführungsbeispielen in Verbindung mit den Figuren näher erläutert. In den Figuren haben gleiche Elemente gleiche Bezugszeichen. Es zeigen:

Fig. 1    eine schematische Darstellung einer beispielhaften Situation in einem Gebäude mit einem Zugangskontrollsystem gemäss einem ersten Ausführungsbeispiel;

Fig. 2    eine schematische Darstellung eines zweiten Ausführungsbeispiels eines Zugangskontrollsystems;

Fig. 3A   eine schematische Darstellung einer Mehrwege-Signalausbreitung zwischen Komponenten, die in der Situation gemäss Fig. 1 auftreten können;

Fig. 3B   eine schematische Darstellung einer beispielhaften ersten Kanalimpulsantwort basierend auf einem ersten Funksignal;

Fig. 3C   eine schematische Darstellung einer beispielhaften zweiten Kanalimpulsantwort basierend auf einem zweiten Funksignal;

Fig. 3D   eine schematische Darstellung der ersten Kanalimpulsantwort mit beispielhaft eingezeichneten Spitzenwerten;

Fig. 3E    eine schematische Darstellung der zweiten Kanalimpulsantwort mit beispielhaft eingezeichneten Spitzenwerten;

Fig. 3F    eine schematische Darstellung einer Überlagerung der in Fig. 3D und 3E gezeigten Kanalimpulsantworten;

Fig. 4    ein Ablaufdiagramm eines Ausführungsbeispiels eines Verfahrens zur Kontrolle des Zugangs zu einer zugangsbeschränkten Zone,

Fig. 5    ein Ablaufdiagramm eines weiteren Ausführungsbeispiels eines Verfahrens zur Kontrolle des Zugangs zu einer zugangsbeschränkten Zone und

Fig. 6    eine schematische Darstellung eines Ausführungsbeispiels einer Signalverarbeitungseinrichtung des in Fig. 1 und Fig. 2 gezeigten Zugangskontrollsystems.

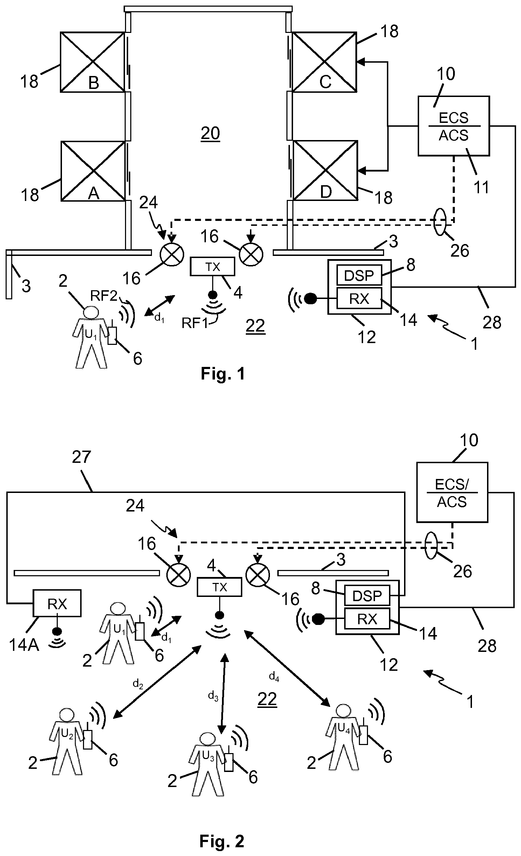

Fig. 1 und Fig. 2 sind schematische Darstellungen von beispielhaften Situationen in einem Gebäude mit einem Zugangskontrollsystem 1. Aus Darstellungsgründen sind vom Gebäude lediglich einige Wände 3, Räume 18 und Zonen 20, 22 eingezeichnet. Die Räume 18 können z. B. Büros, Wohnungen, Hallen und/oder Aufzugskabinen eines Aufzugsystems sein. In der in Fig. 1 gezeigten Situation befindet sich in der Zone 22 ein Nutzer 2 ($U_1$), der ein mobiles elektronisches Geräte 6 (im Folgenden auch als mobiles Gerät 6 bezeichnet) mit sich führt. Das mobile Gerät 6 sendet ein Funksignal RF2 aus. In der in Fig. 2 gezeigten Situation hält sich eine Vielzahl von Nutzern 2 ($U_1$, $U_2$, $U_3$, $U_4$) in der Zone 22 auf. Die Zone 22 unterliegt in diesen beispielhaften Situationen keiner Zugangsbeschränkung und wird im Folgenden auch als öffentliche Zone 22 bezeichnet. Ein Zugang 24 trennt die öffentliche Zone 22 von der Zone 20, die einer Zugangsbeschränkung unterliegt und an die Räume 18 angrenzt. Die Zone 20 wird im Folgenden auch als zugangsbeschränkte Zone 20 bezeichnet. Unter dem Begriff "Gebäude" sind in dieser Beschreibung beispielsweise Wohn- und/oder Geschäftsgebäude, Sportarenen und Flughäfen zu verstehen, wobei auch Schiffe als gebäudeähnliche Strukturen angesehen werden.

Das Zugangskontrollsystem 1 umfasst gemäss einem Ausführungsbeispiel eine Sendeeinrichtung 4 (als TX dargestellt) für ein Funksignal RF1, eine Empfangseinrichtung 14 (als RX dargestellt) für Funksignale RF1, RF2, eine mit der Empfangseinrichtung 14 verbundene Signalverarbeitungseinrichtung 8 (als DSP dargestellt) und eine Steuerung 11 (als ACS dargestellt). Die Empfangseinrichtung 14 und die Signalverarbeitungseinrichtung 8 können in einer Auswerteeinheit 12 angeordnet sein, die durch eine drahtgebundene und/oder drahtlose Verbindung 28 mit der Steuerung 11 des Zugangskontrollsystems 1 verbunden ist.

In Fig. 2 ist das in Fig. 1 gezeigte Anwendungsbeispiel dadurch modifiziert, dass es eine weitere Empfangseinrichtung 14A umfasst. Die Empfangseinrichtung 14A ist mit der Signalverarbeitungseinrichtung 8 der Auswerteeinheit 12 mittels einer drahtgebundenen und/oder drahtlosen Verbindung 27 verbunden. Die Empfangseinrichtung 14A ist optional, sie kann aber u. U. bei der hier beschriebenen Technologie von Vorteil sein, wie an anderer Stelle dieser Beschreibung ausgeführt. Weitere Komponenten und Funktionalitäten des Zugangskontrollsystems 1 gemäss Fig. 1 und Fig. 2 sind an anderer Stelle dieser Beschreibung genannt.

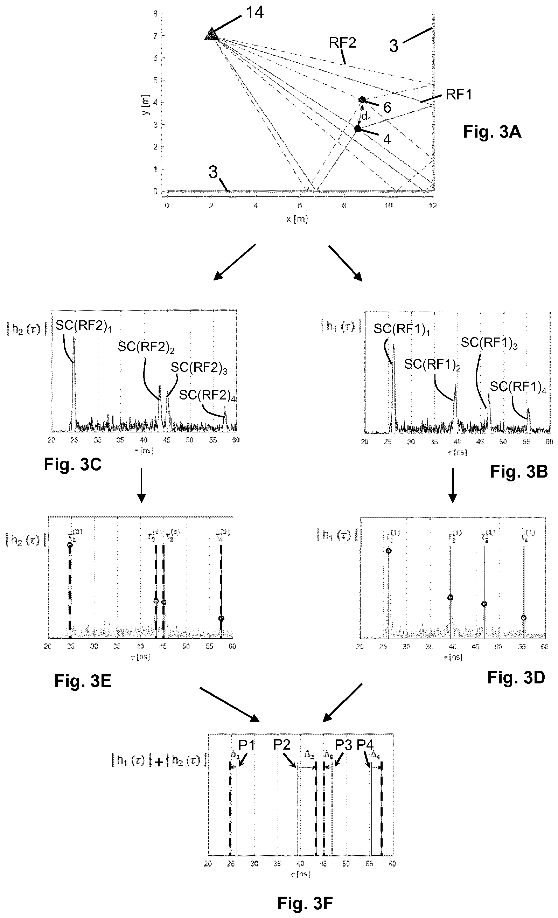

In den in Fig. 1 und Fig. 2 gezeigten Situationen ist die hier beschriebene Technologie in vorteilhafter Weise anwendbar, um das Zugangskontrollsystem 1 mit möglichst geringer Komplexität zu betreiben und dem Nutzer 2 komfortabel Zugang zur zugangsbeschränkten Zone 20 zu gewähren. Kurz und beispielhaft zusammengefasst erfolgt der Betrieb des Zugangskontrollsystems 1 gemäss einem Ausführungsbeispiel wie folgt: Die Technologie erkennt denjenigen Nutzer 2, der sich so nah am Zugang 24 befindet, dass ein festgelegter Mindestabstand zum Zugang 24 unterschritten ist. Dieses Unterschreiten des Mindestabstands wird als Wunsch des Nutzers 2 interpretiert, zu diesem Zeitpunkt die zutrittsbeschränkte Zone 20 betreten zu wollen. Die Technologie wertet dafür Funksignale RF1, RF2 aus, die von der Sendeeinrichtung 4 und vom mobilen Gerät 6 des Nutzers 2 gesendet werden, um darauf basierend unterscheidbare Kanalimpulsantworten ($h(\tau)$) zu erhalten. Da sich die Quellen dieser Funksignale (d. h. die Sendeeinrichtung 4 und das mobile Gerät 6) relativ nah zueinander in der gleichen Umgebung (öffentliche Zone 22) aufhalten, breiten sich die Funksignale auf ähnlichen Wegen aus (z. B. wegen Reflektionen an Wänden 3 und anderen Effekten). Aus diesem Grund ergeben sich Kanalimpulsantworten ($h(r)$), die umso ähnlicher sind, je näher sich das mobile Gerät 6 bei der Sendeeinrichtung 4 befindet. Die hier beschriebene Technologie nutzt dies und bestimmt aus den Kanalimpulsantworten einen Ähnlichkeitsgrad, der angibt, wie ähnlich sich die Kanalimpulsantworten sind. Wenn basierend auf dem Ähnlichkeitsgrad eine festgelegte Regel erfüllt ist, wird eine Gebäudeaktion veranlasst. Die Bestimmung des Ähnlichkeitsgrades und dessen Anwendung für eine Abstandsbestimmung sind in Verbindung mit Fig. 3A-Fig. 3F erläutert.

Die Funk-Komponenten des Zugangskontrollsystems 1 (d. h. die Empfangseinrichtung 14 14A und die Sendeeinrichtung 4) sind im gezeigten Ausführungsbeispiel in der öffentlichen Zone 22 angeordnet. Die Sendeeinrichtung 4 ist im Zugang 24 oder in dessen Umgebung angeordnet, und die Empfangseinrichtung 14 ist an einem davon entfernten Ort in der öffentlichen Zone 22 angeordnet. Der sich dort aufhaltende Nutzer 2 hat in der gezeigten Situation einen Abstand $d_1$ zur Sendeeinrichtung 4. Für jeden weiteren in Fig. 2 gezeigten Nutzer 2 ($U_2$, $U_3$, $U_4$) ist zur Illustration ebenfalls ein momentaner Abstand $d_2$, $d_3$, $d_4$ zur Sendeeinrichtung 4 und damit zum Zugang 24 eingezeichnet. Der Ort der Empfangseinrichtung 14 ist so gewählt, dass sie ein von der Sendeeinrichtung 4 ausgesendetes Funksignal in ausreichender Signalstärke empfängt, d. h. ein Funksignal hat am Ort der Empfangseinrichtung 14 eine Signalstärke (beispielsweise ausgedrückt durch einen RSSI-Wert (Received Signal Strength Indicator)), die grösser als ein für einen sicheren Empfang festgelegter Schwellenwert ist. Der Ort der Empfangseinrichtung 14A ist in entsprechender Weise gewählt.

Im Folgenden ist ein Ausführungsbeispiel der hier beschriebenen Technologie mit Bezug auf die in Fig. 1 gezeigte Situation erläutert. In einem Ausführungsbeispiel sendet die Sendeeinrichtung 4 das Funksignal RF1 aus, das eine relativ hohe Bandbreite hat, beispielsweise grösser als ca. 500 MHz, beispielsweise zwischen 1 GHz - 4 GHz. Die Bandbreite, charakterisiert durch eine untere und eine obere Grenzfrequenz, gibt die Breite des dazwischenliegenden Frequenzspektrums an, in welchem dominante Frequenzanteile eines zu übertragenden Signals liegen. Die Sendeeinrichtung 4 sendet das Funksignal RF1 gemäss einem für diese Bandbreite ausgelegten Standard für Funkkommunikation, beispielsweise gemäss einem (Breitband-) WLAN/WiFi Standard (802.11ad) oder einem Standard für die Ultra-Breitband (ultra-wideband (UWB)) Technologie (IEEE 802.15.4a). Das Funksignal RF1 kann auch gemäss dem 5G Standard oder einem anderen oder zukünftigen Standard für breitbandige Funkkommunikation ausgesendet werden.

Die Sendeeinrichtung 4 erzeugt und sendet mit dem Funksignal RF1 in einem Ausführungsbeispiel eine Trainingssequenz, die periodisch oder kontinuierlich ausgesendet wird. Die Trainingssequenz besteht aus vordefinierten Bitmustern, sodass die Trainingssequenz für die Sendeeinrichtung 4 charakteristisch ist; damit kann das Funksignal RF1 von anderen Funksignalen (z. B. dem Funksignal RF2) unterschieden werden. In einem Ausführungsbeispiel kann das Funksignal RF1 mittels der Trainingssequenz in einem Empfänger der Sendeeinrichtung 4 zugeordnet werden kann. Die Trainingssequenz kann beispielsweise eine m-Sequenz (Folge maximaler Länge (maximum length sequence)) sein, die z. B. mittels Schieberegister mit einem Generatorpolynom oder mittels eines Computerprogramms erzeugt werden kann.

Das Funksignal RF1 kann in einem Ausführungsbeispiel ausgestaltet sein, um neben der Trainingssequenz zusätzliche Information zu übertragen, beispielsweise Angaben zu einem Standort der Sendeeinrichtung 4 oder eine Senderkennung, die in einer Datenbank dem Standort zugeordnet ist. Das Funksignal RF1 kann ausserdem dazu vorgesehen sein, das mobile Gerät 6 zum Senden eines Antwortsignals zu veranlassen, beispielsweise um das Antwortsignal in eine definierte zeitliche Beziehung zum Funksignal RF1 zu setzen, beispielsweise hat das Antwortsignal einen zeitlichen Versatz zum Funksignal RF1.

Die Empfangseinrichtung 14 ist kompatibel zum Standard für Funkkommunikation gemäss die die Sendeeinrichtung 4 sendet. Die Empfangseinrichtung 14 ist zudem dazu ausgelegt, das breitbandige Funksignal RF1 zu empfangen und die Trainingssequenz auszuwerten. Die Empfangseinrichtung 14 empfängt auch das vom mobilen Gerät 6 des Nutzers 2 ausgesendete Funksignal RF2, wenn sich der Nutzer 2 bzw. das mobile Gerät 6 in Funkreichweite zur Empfangseinrichtung 14 befindet.

Das mobile Gerät 6 hat ein Funkmodul, das in einem Ausführungsbeispiel das Funksignal RF2 entsprechend dem Standard für Funkkommunikation erzeugt und sendet, der für die Sendeeinrichtung 4 gewählt ist. Ähnlich dem Funksignal RF1 ist auch das Funksignal RF2 breitbandig, d. h. die Bandbreite ist beispielsweise grösser als ca. 500 MHz, beispielsweise zwischen 1 GHz - 4 GHz. In einem Ausführungsbeispiel erzeugt und sendet das Funkmodul mit dem Funksignal RF2 eine Trainingssequenz, die periodisch oder kontinuierlich ausgesendet wird und für das mobile Gerät 6 charakteristisch sein kann. In den Ausführungsbeispielen der hier beschriebenen Technologie ist das Funkmodul des mobilen Geräts 6 aktiviert, wenn sich der Nutzer 2 in der öffentlichen Zone 22 aufhält. Im aktivierten Zustand sendet das mobile Gerät 6 das Funksignal RF2 beispielsweise kontinuierlich aus; es kann in einem Ausführungsbeispiel so konfiguriert (programmiert) sein, dass es das Funksignal RF2 erst nach Empfang des von der Sendeeinrichtung 4 gesendeten Funksignal RF1 aussendet, beispielsweise als Antwortsignal für Synchronisationszwecke.

In einem Ausführungsbeispiel kann das mobile Gerät 6 ausserdem zum Senden einer Kennung konfiguriert sein, die es erlaubt, das mobile Gerät 6 dem Nutzer 2 zuzuordnen (wie an anderer Stelle dieser Beschreibung ausgeführt). Die Kennung kann mit dem Funksignal RF2 gesendet werden, beispielsweise darin eingebettet und gemäss dem für das Funksignal RF2 verwendeten Standard für Funkkommunikation. Die Kennung kann auch getrennt vom Funksignal RF2 gesendet werden, beispielsweise unter Verwendung der Bluetooth Funktechnologie oder einer (eventuell schmalbandigen) WLAN/WiFi Funktechnologie; in diesem Fall ist die gewählte Funktechnologie auch in der Empfangseinrichtung 14 implementiert, so dass die Kennung empfangen werden kann.

Das mobile Gerät 6 kann z. B. eine anwendungsspezifische Softwareanwendung (auch als App bezeichnet) aufweisen, die beispielsweise durch den Nutzer 2 aktivierbar ist. Die anwendungsspezifische Softwareanwendung wird in einem Ausführungsbeispiel in Verbindung mit der Zugangskontrolle und der Nutzung von Aufzügen verwendet. Die anwendungsspezifische Software steuert in einem Ausführungsbeispiel das Erzeugen und Senden des Funksignals RF2. Je nach Ausgestaltung kann diese Software auch die Kennung des mobilen Geräts 6 erzeugen, beispielsweise eine für das mobile Gerät 6 einzigartige und zeitlich unveränderliche Kennung. Eine solche durch Software erzeugte Kennung stellt eine Alternative zu einer Geräteidentifikationsnummer und einer Telefonnummer, die ebenfalls als Kennung verwendet werden können, dar.

Die Bestimmung des Ähnlichkeitsgrades und dessen Anwendung für eine Abstandsbestimmung sind im Folgenden in Verbindung mit Fig. 3A-Fig. 3F erläutert. Fig. 3A zeigt eine schematische Darstellung einer Mehrwege-Signalausbreitung ausgehend von Funksignalquellen (4, 6). Die Funksignalquellen entsprechen in der Situation gemäss Fig. 1 der Sendeeinrichtung 4 und dem mobilen Gerät 6, die durch einen Abstand $d_1$ voneinander getrennt sind. Fig. 3A zeigt ausserdem die in Fig. 1 dargestellte Empfangseinrichtung 14, eine Wand 3 mit zwei senkrecht aufeinander stehenden Wandflächen und ein X-Y Koordinatensystem.

Die Empfangseinrichtung 12 empfängt die vom mobilen Gerät 6 und der Sendeeinrichtung 4 ausgesendeten Funksignale RF1, RF2. Die Funksignale RF1, RF2 breiten sich im Raum in alle Richtungen aus und werden dabei an eventuell vorhandenen Hindernissen und Wänden 3 mehr oder weniger reflektiert, gebeugt und/oder gestreut oder anderweitig in der Ausbreitung beeinflusst. Dies ist dem Fachmann beispielsweise unter dem Begriff "Mehrwegeausbreitung" bekannt. Zur Illustration sind in Fig. 3A einige dieser Signalwege gezeigt, wobei durchgezogene Linien die Signalwege des von der Sendeeinrichtung 4 ausgesendeten Funksignals RF1 darstellen und gestrichelte Linien die Signalwege des vom mobilen Gerät 6 ausgesendeten Funksignals RF2 darstellen. Die Empfangseinrichtung 14 empfängt beispielsweise das Funksignal RF2 des mobilen Geräts 6 auf direktem Weg und auf einer Vielzahl anderer Wege. In analoger Weise empfängt die Empfangseinrichtung 14 das Funksignal RF1 der Sendeeinrichtung 4. Der Fachmann erkennt, dass ein Empfang auf direktem Weg nicht immer gegeben ist, weil sich z. B. ein Hindernis (z. B. ein Nutzer 2) zwischen der Empfangseinrichtung 14 und der Sendeeinrichtung 4 befindet, und dass in einem solchen Fall die Empfangseinrichtung 14 nur Signale empfängt, die sich auf indirekten Wegen ausbreiten.

Wie oben ausgeführt, sind die von der Empfangseinrichtung 14 empfangenen Funksignale RF1, RF2 unterscheidbar, in einem Ausführungsbeispiel beispielsweise wegen unterschiedlicher Trainingssequenzen. Ist die Trainingssequenz eine m-Sequenz, dann existieren für gewisse Längen ($2^N$-1) der Bitfolgen orthogonale m-Sequenzen, mittels derer mehrere Sender (hier die Sendeeinrichtung 4 und das mobile Gerät 6) eine Trainingssequenz zu einem Empfänger (hier die Empfangseinrichtung 14) senden können, ohne dass es zu Interferenzen kommt. Das Funksignal RF2 des mobilen Geräts 6 kann auch die Kennung des mobilen Geräts 6 aussenden, sodass es vom Funksignal RF1 unterschieden werden kann, auch wenn das Funksignal RF1 selbst keine individuelle Kennung enthält. Die Empfangseinrichtung 14 bestimmt für jedes Funksignal RF1, RF2 eine dazugehörige Kanalimpulsantwort $h_1(\tau)$, $h_2(\tau)$.

Dem Fachmann ist bekannt, dass die Kanalimpulsantwort $h(\tau)$ eine Beschreibung des momentanen linearen Übertragungskanals ist und, per Definition, jenem Signal entspricht, das an einem Ausgang des Übertragungskanals bestimmt werden kann, wenn an einem Eingang des Übertragungskanals ein Dirac-Impuls als Eingangssignal zugeführt wird. Die Kanalimpulsantwort beschreibt die Wirkung, die der Übertragungskanal auf das Eingangssignal ausübt, beispielsweise als Funktion der Zeit. Die Kenntnis der Kanalimpulsantwort $h(r)$ verbessert beispielsweise in einem Empfänger ein Decodieren von Empfangssymbolen; in manchen funkbasierten Kommunikationssystemen (z. B WLAN 802.11) wird die Kanalimpulsantwort $h(r)$ daher empfängerseitig geschätzt. Die Schätzung der Kanalimpulsantwort $h(r)$ kann auf einer empfangenen Trainingssequenz basieren.

Basierend auf dem Funksignal RF1, das von der Sendeeinrichtung 4 ausgesendet wird, kann nach Empfang durch die Empfangseinrichtung 14 eine erste Kanalimpulsantwort $h_1(\tau)$ bestimmt werden; Fig. 3B zeigt eine schematische Darstellung einer beispielhaften Betragsfunktion $|h_1(\tau)|$ der ersten Kanalimpulsantwort $h_1(\tau)$ als Funktion der Zeit in Nanosekunden (ns). In dieser beispielhaften Darstellung hat die Betragsfunktion $|h_1(\tau)|$ vier Spitzenwerte bei $\tau_1 \approx 26$ ns, $\tau_2 \approx 40$ ns, $\tau_3 \approx 47$ ns und $\tau_4 \approx 55$ ns; jeder dieser Spitzenwerte entspricht einer Mehrwege-Signalkomponente $SC(RF1)_k$ (k = 1, 2, 3, 4) des Funksignals RF1, die in diesem Ausführungsbeispiel bei der Auswertung berücksichtigt werden.

Basierend auf dem Funksignal RF2, das vom mobilen Gerät 6 ausgesendet wird, kann nach Empfang durch die Empfangseinrichtung 14 eine zweite Kanalimpulsantwort $h_2(\tau)$ bestimmt werden; Fig. 3C zeigt eine schematische Darstellung einer beispielhaften Betragsfunktion $|h_2(\tau)|$ der zweiten Kanalimpulsantwort $h_2(\tau)$ als Funktion der Zeit in Nanosekunden (ns). In dieser beispielhaften Darstellung hat die Betragsfunktion $|h_2(\tau)|$ vier Spitzenwerte bei $\tau_1 \approx 25$ ns, $\tau_2 \approx 43$ ns, $\tau_3 \approx 45$ ns und $\tau_4 \approx 58$ ns, ; jeder dieser Spitzenwerte entspricht einer Mehrwege-Signalkomponente $SC(RF2)_k$ (k = 1, 2, 3, 4) des Funksignals RF2.

In einem Ausführungsbeispiel können die Mehrwege-Signalkomponenten $SC(RF1)_1$, $SC(RF2)_1$ jeweils einer auf direktem Funkweg empfangenen Signalkomponente entsprechen. Die Empfangseinrichtung 14 hat somit "Sichtverbindung" (line of sight) zur Sendeeinrichtung 4 und zum mobilen Gerät 6. Der Fachmann erkennt, dass je nach momentan vorherrschender Situation (z. B. zwischen mobilem Gerät 6 und der Empfangseinrichtung 14 befindet sich ein Hindernis (z. B. anderer Nutzer oder Gebäudeteil)) in der öffentlichen Zone 22 diese Sichtverbindung nicht gegeben sein kann. In einer solchen Situation kann mindestens eine dieser (ersten) Mehrwege-Signalkomponenten $SC(RF1)_1$, $SC(RF2)_1$ nicht auftreten. Die hier beschriebene Technologie ermöglicht auch in dieser Situation, den Ähnlichkeitsgrad zu bestimmen.

Der Fachmann erkennt auch, dass die Empfangseinrichtung 14 und die Signalverarbeitungseinrichtung 8 ausgestaltet sind, z. B. eine festgelegte Empfangsbandbreite haben, um in den Funksignalen RF1, RF2 mehrere Mehrwege-Signalkomponenten $SC(RF1)_k$, $SC(RF2)_k$ aufzulösen, damit sie auswertbar sind. Wie oben ausgeführt, ist die jeweilige Bandbreite der Funksignale RF1, RF2 grösser als 500 MHz, entsprechend dazu ist die Empfangsbreite der Empfangseinrichtung 14 festzulegen. Je höher die Bandbreite der Funksignale RF1, RF2 ist, desto grösser ist der Abstand zwischen den Signalkomponenten $SC(RF1)_k$, $SC(RF2)_k$ und desto genauer können die Signalkomponenten $SC(RF1)_k$, $SC(RF2)_k$ und deren zeitliche Differenz ausgewertet werden. Der Fachmann erkennt ausserdem, dass die Zahl k der Mehrwege-Signalkomponenten $SC(RF1)_k$, $SC(RF2)_k$ nicht auf vier beschränkt ist.

Die Signalverarbeitungseinrichtung 8 detektiert für jede der Kanalimpulsantworten $h_1(\tau)$, $h_2(\tau)$ die Mehrwege-Signalkomponenten $SC(RF1)_k$, $SC(RF2)_k$, die dazugehörigen Spitzenwerte und deren zeitliches Auftreten $(\tau)$. Dies ist in Fig. 3D und Fig. 3E illustriert. Fig. 3D ist eine schematische Darstellung der Betragsfunktion $|h_1(\tau)|$ der ersten Kanalimpulsantwort $h_1(\tau)$ mit den eingezeichneten beispielhaften vier Mehrwege-Signalkomponenten $SC(RF1)_k$, und Fig. 3E ist eine schematische Darstellung der Betragsfunktion $|h_2(\tau)|$ der zweiten Kanalimpulsantwort $h_2(\tau)$ mit den eingezeichneten beispielhaften vier Mehrwege-Signalkomponenten $SC(RF2)$, jeweils zu den Zeitpunkten $\tau_1$, $\tau_2$, $\tau_3$, $\tau_4$.

Das zeitliche Auftreten der Mehrwege-Signalkomponenten $SC(RF1)_k$, $SC(RF2)_k$ wird aus den Kanalimpulsantworten $h_1(\tau)$, $h_2(\tau)$ extrahiert. Für einen solchen Extraktionsprozess kann in einem Ausführungsbeispiel der SAGE-Algorithmus (Space-Alternating Generalized Expectation-Maximization) verwendet werden, wie beispielsweise beschrieben in: B. H. Fleury, et al., "Channel parameter estimation in mobile radio environments using the SAGE algorithm", IEEE Journal on selected areas in communications, Vol. 17, No. 3, Seiten, 434 - 450, 1999, und T. Santos, J. Karedal, P. Almers, F. Tufvesson, and A. Molisch, "Modeling the ultra wideband outdoor channel: Measurements and parameter extraction method," IEEE Transactions on Wireless Communications, Vol. 9, No. 1, Seiten 282 - 290, 2010.

Aus Fig. 3B - 3D ist erkennbar, dass die Kanalimpulsantworten $h_1(\tau)$, $h_2(\tau)$ ähnlich sind, weil sich die Sendeeinrichtung 4 und das mobile Gerät 6 relativ nah zueinander in der gleichen Umgebung (öffentliche Zone 22) aufhalten. Dabei gilt, dass je kleiner der Abstand $d_1$ ist, d. h. je näher sich das mobile Gerät 6 bei der Sendeeinrichtung 4 befindet, desto ähnlicher sind die Kanalimpulsantworten $h_1(\tau)$, $h_2(\tau)$. Im umgekehrten Fall, d. h. bei grösser werdendem Abstand $d_1$, nimmt die Ähnlichkeit der Kanalimpulsantworten $h_1(\tau)$, $h_2(\tau)$ zunehmend ab. In der in Fig. 1 gezeigten Situation ist die Umgebung, in der sich die Sendeeinrichtung 4 und das mobile Gerät 6 befinden, relativ eng begrenzt, sie ist z. B. eine Eingangshalle in einem Gebäude. Die Ähnlichkeit der Kanalimpulsantworten $h_1(\tau)$, $h_2(\tau)$ zeigt sich z. B. dadurch, dass (bei Sichtverbindung) beide vier erkennbar hervortretende Mehrwege-Signalkomponenten $SC(RF1)_k$, $SC(RF2)_k$ haben, die zu ähnlichen Zeitpunkten $\tau_1$, $\tau_2$, $\tau_3$, $\tau_4$ auftreten.

Die jeweils zuerst auftretende Mehrwege-Signalkomponente $SC(RF1)_1$, $SC(RF2)_1$ (k = 1) ergibt sich aus dem Funksignal RF1, RF2, das bei Sichtverbindung auf direktem Weg (z. B. ohne Reflektion an der Wand 3) von der Empfangseinrichtung 14 empfangen wird. Bei diesen zuerst auftretenden Mehrwege-Signalkomponenten $SC(RF1)_1$, $SC(RF2)_1$ (k = 1) sind die Spitzenwerte in der Regel am grössten. Die Spitzenwerte der nachfolgenden Mehrwege-Signalkomponenten $SC(RF1)_k$, $SC(RF2)_k$ (k = 2, 3, 4) nehmen in der Regel der Reihenfolge nach ab.

Gemäss der hier beschriebenen Technologie wird die Ähnlichkeit der Kanalimpulsantworten $h_1(\tau)$, $h_2(\tau)$ genutzt, um einen Ähnlichkeitsgrad zu bestimmen. Basierend auf dem Ähnlichkeitsgrad wird der Abstand $d_1$ bestimmt. Für die Bestimmung des Ähnlichkeitsgrads werden in einem Ausführungsbeispiel die Mehrwege-Signalkomponenten $SC(RF1)_k$, $SC(RF2)_k$ (k = 1, 2, 3, 4) paarweise betrachtet, d. h. die zuerst auftretenden Mehrwege-Signalkomponenten $SC(RF1)_1$, $SC(RF2)_1$ (k = 1) bilden ein Paar P1, und die an zweiter Stelle auftretenden Mehrwege-Signalkomponenten $SC(RF1)_2$, $SC(RF2)_2$ (k = 2) bilden ein Paar P2; entsprechend dazu ergeben sich die Paare P3 und P4.

Fig. 3F zeigt eine schematische Darstellung einer graphischen Überlagerung der in Fig. 3D und 3E gezeigten Betragsfunktionen $|h_1(\tau)|$, $|h_2(\tau)|$, wobei lediglich die Mehrwege-Signalkomponenten $SC(RF1)_k$, $SC(RF2)_k$ gezeigt sind. Die genannte paarweise Betrachtung der Mehrwege-Signalkomponenten $SC(RF1)_k$, $SC(RF2)_k$ ist in Fig. 3F ebenfalls illustriert. Für jedes der Paare P1 - P4 ist eine Zeitdifferenz $\Delta_k$ eingezeichnet, die angibt, ob die jeweilige Mehrwege-Signalkomponente $SC(RF2)_k$ des zweiten Funksignals RF2 vor oder nach der entsprechenden Mehrwege-Signalkomponente $SC(RF1)_k$ des ersten Funksignals RF1 von der Empfangseinrichtung 14 empfangen wird. Ein Vorzeichen der Zeitdifferenz $\Delta_k$ gibt an, welche Signalkomponente eines Paars P1 - P4 zuerst empfangen wird.

Die in Fig. 3F gezeigten Zeitdifferenzen $\Delta_k$ ergeben sich für jedes Paar P1 - P4 aus der Gleichung

$$\Delta_k = \tau^{RF2}_k - \tau^{RF1}_k$$

mit k = 1, ..., K. Wenn diese Zeitdifferenzen $\Delta_k$ bestimmt sind, wird das Paar bestimmt, für das die Zeitdifferenz $\Delta_k$ den grössten Betrag aufweist, d. h. $\max\{|\Delta_1|, ..., |\Delta_k|\}$. Das Maximum des Betrags über alle Paare ist ein Mass für die Ähnlichkeit der beiden Kanalimpulsantworten $h_1(\tau)$, $h_2(\tau)$; dieses Mass ist als Ähnlichkeitsgrad bezeichnet.

Aus geometrischen Gründen ist der Abstand $d_1$ begrenzt, d. h.

$$d_l \geq c \cdot \left| \Delta_k \right|$$

für jedes k. Die Bestimmung des Abstand $d_l$ erfolgt mit der Gleichung

$$d_l = E_S \cdot c \cdot SD_S,$$

dabei sind: c die Lichtgeschwindigkeit, $E_S = (K + 1)/K$ ein im Folgenden erläuterter Korrekturfaktor und $SD_S = \max \{|\Delta_1|, ..., |\Delta_k|\}$ ein Ähnlichkeitsgrad bei gemeinsamer Zeitreferenz.

Bei den bisherigen Ausführungen zur Bestimmung des Abstand $d_l$ ist angenommen, dass die Funksignale RF1, RF2 eine gemeinsame Zeitreferenz haben, d. h. zueinander synchron sind. Dies kann beispielsweise erreicht werden durch die Verwendung von hochgenauen Uhren in der Sendeeinrichtung 4, dem mobilen Gerät 6 und der Empfangseinrichtung 14 und/oder mittels sogenannter Umlaufzeit-Protokolle (round-trip time protocols) zur Synchronisierung von drahtlos miteinander verbundenen Systemkomponenten. Einen Überblick über derartige Synchronisierungsverfahren bietet beispielsweise Ill-Keun Rhee, et al., "Clock Synchronization in Wireless Sensor Network: An Overview", Sensors 2009, Vol. 9, S. 56 - 85).

Für eine sehr hohe Anzahl K von Mehrwege-Signalkomponenten $SC(RF1)_k$, $SC(RF2)_k$ geht bei synchronen Funksignalen RF1, RF2 der Korrekturfaktor Es gegen 1. Mit Es = 1 ergibt sich der Abstand $d_l$ aus $d_l = c \cdot \max\{|\Delta_1|, ..., |\Delta_K|\}$. Bei einer relativ geringen Anzahl von K Mehrwege-Signalkomponenten $SC(RF1)_k$, $SC(RF2)_k$ ist der Korrekturfaktor $E_S = (K + 1)/K$. Im hier beschriebenen Ausführungsbeispiel mit K = 4 ist $E_S = 5/4$.

Die hier beschriebene Technologie ist auch einsetzbar, wenn die Funksignale RF1, RF2 keine gemeinsame Zeitreferenz haben, d. h. zueinander asynchron sind. In diesem Fall ergibt sich der Abstand $d_l$ gemäss

$$d_l = E_A \cdot c/2 \cdot SD_A,$$

dabei sind: c die Lichtgeschwindigkeit, $E_A = (K + 1)/(K - 1)$ ein im Folgenden beschriebener Korrekturfaktor und $SD_A = (\max\{\Delta_1, ..., \Delta_K\} - \min\{\Delta_1, ..., \Delta_K\})$ ein Ähnlichkeitsgrad bei keiner gemeinsamer Zeitreferenz.

Auch bei asynchronen Funksignalen RF1, RF2 geht der Korrekturfaktor $E_A$ für eine sehr hohe Anzahl K von Mehrwege-Signalkomponenten $SC(RF1)_k$, $SC(RF2)_k$ gegen 1. Mit $E_A = 1$ ergibt sich der Abstand $d_l$ aus $d_l = c/2 \cdot (\max\{\Delta_1, ..., \Delta_K\} - \min\{\Delta_1, ..., \Delta K\})$. Bei einer relativ geringen Anzahl von K Mehrwege-Signalkomponenten $SC(RF1)_k$, $SC(RF2)_k$ ist der Korrekturfaktor $E_A = (K + 1)/(K - 1)$. Im hier beschriebenen Ausführungsbeispiel mit K = 4 ist $E_A = 5/3$.

Den so bestimmten Abstand $d_l$ nutzt das Zugangskontrollsystem 1 in den in Fig. 1 und Fig. 2 gezeigten Situationen, um ihn mit einem festgelegten Mindestabstand zu vergleichen. Basierend auf diesem Vergleich und Information über die Zugangsberechtigung des Nutzers 2, z. B. die ihm zugeordnete Kennung, kontrolliert das Zugangskontrollsystem 1 den Zugang 24, sodass nur berechtigte Nutzer 2 in die Zone 20 gelangen können, beispielsweise durch Blockieren oder Freigeben einer Tür, einer Schranke, eines Drehkreuzes, oder einer anderen physischen Barriere oder Schleuse. Bei Zugängen 24 ohne solche physischen Barrieren kann das Zugangskontrollsystem 1 beispielsweise den Zugang 24 dadurch kontrollieren, dass bei Erkennen eines nichtberechtigten Nutzers ein optischer und/oder akustischer Alarm ausgelöst wird; alternativ dazu oder zusätzlich kann eine Benachrichtigung eines Sicherheitsdienstes veranlasst werden. Unabhängig davon, ob die Schleuse mit oder ohne einer physischen Barriere ausgestattet ist, kann zusätzlich eine evtl. vorhandene Informationseinrichtung aktiviert werden, um z. B. einen Nutzer zu informieren. In Fig. 1 und Fig. 2 sind als beispielhafte physische Barrieren zwei Drehkreuze 16 eingezeichnet, die die Steuerung (ACS) 11 des Zugangskontrollsystems 1 jeweils mittels einer drahtgebunden und/oder drahtlosen Verbindung 26 ansteuert.

In Fig. 1 und Fig. 2 sind Komponenten des Zugangskontrollsystems 1 zur Veranschaulichung im Zugang 24 oder in dessen Umgebung angeordnet. Je nachdem für welches Verkehrsaufkommen das Zugangskontrollsystem 1 vorgesehen ist, besteht der Zugang 24 aus mehreren einzelnen Schleusen; beispielsweise kann jedes der beiden Drehkreuze 16 eine Schleuse darstellen. Der Fachmann erkennt, dass in einer konkreten Implementierung das Zugangskontrollsystem 1 bzw. seine Komponenten anders als in den Figuren gezeigt angeordnet sein können. Jede einzelne Schleuse kann beispielsweise einen einzelnen Zugang darstellen, an dem eine Sendeeinrichtung 4 angeordnet sein kann. Bezogen auf diese Sendeeinrichtung 4 kann der Abstand $d_l$ des Nutzers 2 an dieser Schleuse bestimmt werden.

Die in Fig. 1 dargestellten Räume 18 können beispielsweise zu einer Gruppe von Aufzügen gehören, die z. B. vier Aufzüge (A-D) umfasst und von einer Aufzugssteuerung (ECS) 10 gesteuert wird. Hat ein Nutzer 2 am Zugang 24 einen Abstand $d_l$, der z. B. kleiner als der Mindestabstand ist, bedeutet dies in einem Ausführungsbeispiel, dass der Nutzer 2 mit einem der Aufzüge auf ein für diesen Nutzer 2 festgelegtes Zielstockwerk transportiert werden möchte. Gemäss einem Ausführungsbeispiel stellt ein solcher Transport eine vom Nutzer 2 gewünschte Gebäudeaktion dar. Mit dem Erkennen des Nutzers 2 wird ein Zielruf veranlasst, dem die Aufzugssteuerung 10 einen Aufzug (A-D) für eine Fahrt von einem Einsteigestockwerk auf ein Zielstockwerk zuteilt. Der zugeteilte Aufzug (A-D) wird dem Nutzer 2 mitgeteilt, beispielsweise mittels einer Anzeigeeinheit. In den in Fig. 1 und Fig. 2 gezeigten Situationen kann jedem Drehkreuz 16 jeweils eine Anzeigeeinheit zugeordnet sein. Nutzt der Nutzer 2 beispielsweise eines der gezeigten Drehkreuze 16, erkennt das Zugangskontrollsystem 1, an welchem Drehkreuz 16 sich der Nutzer 2 befindet und steuert die dort angeordnete Anzeigeeinheit an, um den zugeteilten Aufzug (z. B. "A") anzuzeigen. Der Fachmann erkennt, dass der zugeteilte Aufzug, dem Nutzer 2 sichtbar und/oder hörbar mitgeteilt werden kann.

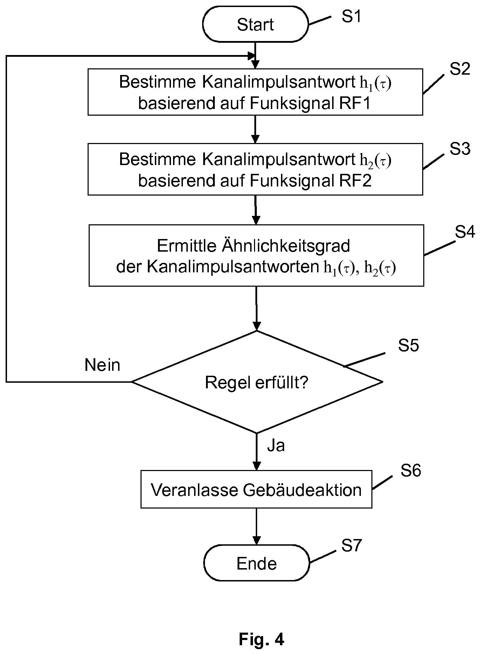

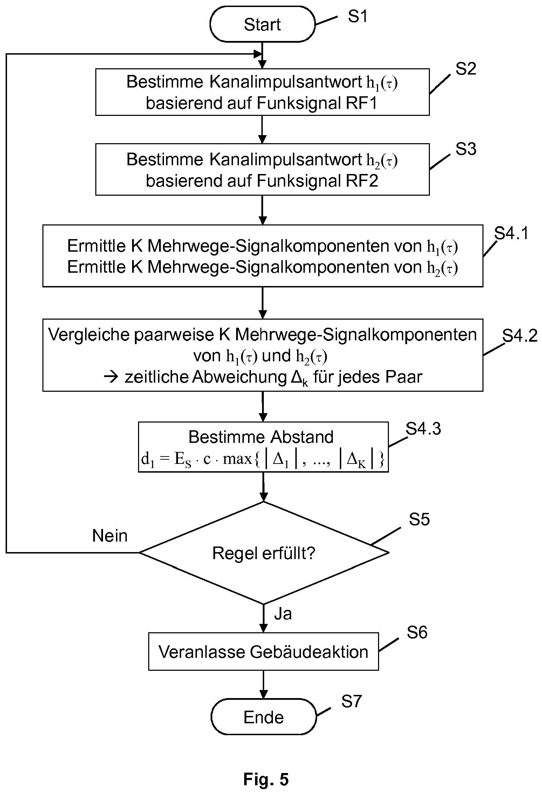

Mit dem Verständnis der oben beschriebenen prinzipiellen Systemkomponenten und deren Funktionalitäten, erfolgt im Folgenden in Verbindung mit Fig. 4 und Fig. 5 eine Beschreibung eines beispielhaften Verfahrens zum Betreiben des Zugangskontrollsystems 1 ausgehend von der in Fig. 1 gezeigten Situation (d. h. eine einzige Sendeeinrichtung 4 und ein einziger Nutzer 2). Fig. 4 zeigt ein vereinfachtes Ablaufdiagramm des Verfahrens, während Fig. 5 ein Ablaufdiagramm mit detaillierteren Schritten des Verfahrens zeigt.

Die Beschreibung erfolgt mit Bezug auf den Nutzer 2, der am Zugang 24 die zugangsbeschränkte Zone 20 zu betreten wünscht, beispielsweise um dort einen Aufzug zu benutzen. Der Nutzer 2 trägt das mobile Gerät 6 bei sich und hat dessen Funkmodul (z. B. für breitbandige WLAN/WiFi oder UWB Kommunikation) aktiviert. Eine eventuell dazugehörige Softwareanwendung ist aktiviert. Die ortsfeste Sendeeinrichtung 4 ist ebenfalls aktiviert und sendet das Funksignal RF1 aus.

Das in Fig. 4 gezeigte Verfahren beginnt in einem Schritt S1 und endet in einem Schritt S7. Der Fachmann erkennt, dass die Aufteilung in diese Schritte beispielhaft ist und dass einer oder mehrere dieser Schritte in einen oder mehrere Teilschritte aufgeteilt oder dass mehrere der Schritte zu einem Schritt zusammengefasst werden können.

In einem Schritt S2 empfängt die Empfangseinrichtung 14 das von der Sendeeinrichtung 4 gesendete Funksignal RF1, das die der Sendeeinrichtung 4 zugeordnete Trainingssequenz überträgt. Die Signalverarbeitungseinrichtung 8 bestimmt basierend auf dem empfangenen Funksignal RF1 eine Kanalimpulsantwort $h_1(\tau)$, wie in Verbindung mit Fig. 3B erläutert ist.

Befindet sich der Nutzer 2 mit seinem mobilen Gerät 6 in der öffentlichen Zone 22 und in Funkreichweite zur Empfangseinrichtung 14, empfängt die Empfangseinrichtung 14 in einem Schritt S3 ein vom mobilen Gerät 6 ausgesendetes Funksignal RF2, das die dem mobilen Gerät 6 zugeordnete Trainingssequenz überträgt. Die Signalverarbeitungseinrichtung 8 bestimmt basierend auf dem empfangenen Funksignal RF2 eine Kanalimpulsantwort $h_2(\tau)$, wie in Verbindung mit Fig. 3C erläutert ist.

Das mobile Gerät 6 sendet das Funksignal RF2 beispielsweise als Antwort auf ein empfangenes Funksignal, das die Sendeeinrichtung 4 beispielsweise periodisch aussendet. Bei diesem Funksignal kann es sich um das Funksignal RF1 oder ein separates Funksignal für Synchronisierungszwecke handeln. Das Funksignal RF2 enthält eine Trainingssequenz, wie oben beschrieben, durch die das Funksignal RF2 in der Auswerteeinrichtung 12 vom Funksignal RF1 unterschieden werden kann. Das mobile Gerät 6 kann das Funksignal RF2 auch unabhängig von einem äusseren Ereignis oder Einfluss aussenden, beispielsweise gesteuert durch die Softwareanwendung.

Das mobile Gerät 6 kann auch eine Kennung des mobilen Geräts 6 aussenden, entweder eingebettet in das Funksignal RF2 oder als separates Funksignal, das z. B. gemäss einer Bluetooth Technologie ausgesendet wird. Mittels dieser Kennung kann überprüft werden, ob sie in einer Datenbank mit einer Vielzahl von Nutzerprofilen einem zugangsberechtigten Nutzer 2 zugeordnet ist. Die Steuerung 11 des Zugangskontrollsystems 1 kann diese Überprüfung beispielsweise unmittelbar nach dem (erstmaligen) Empfang der Kennung durch die Empfangseinrichtung 14 durchführen, auch wenn der Nutzer 2 sich nur in der öffentlichen Zone 22 aufhält und zu diesem Zeitpunkt noch keinen Zutritt wünscht. Die Überprüfung kann auch erst dann erfolgen, wenn der Nutzer 2 tatsächlich Zutritt wünscht, z. B. dann, wenn er sich sehr nahe am Zugang 24 bzw. der Sendeeinrichtung 14 befindet. Im hier beschriebenen Ausführungsbeispiel ist angenommen, dass der Nutzer 2 zugangsberechtigt ist und für ihn in einem Schritt S6 eine gewünschte Gebäudeaktion veranlasst wird.

In einem Schritt S4 bestimmt die Signalverarbeitungseinrichtung 8 einen Ähnlichkeitsgrad mittels eines Vergleichs der ersten und zweiten Kanalimpulsantworten $h_1(\tau)$, $h_2(\tau)$. Der Ähnlichkeitsgrad (max$\{|\Delta_1|, ..., |\Delta_K|\}$) wird gemäss der oben genannten Gleichung $\Delta_k = \tau^{RF2}_k - \tau^{RF1}_k$ bestimmt. Ausgehend davon wird bei synchronen Funksignalen RF1, RF2 der Abstand gemäss $d_1 = E_s \cdot c \cdot \max\{|\Delta_1|, ..., |\Delta_K|\}$ bestimmt; bei asynchronen Funksignalen RF1, RF2 wird der Abstand gemäss $d_1 = E_A \cdot c/2 \cdot (\max\{\Delta_1, ..., \Delta_K\} - \min\{\Delta_1, ..., \Delta_K\})$ bestimmt.

In einem Schritt S5 wird basierend auf dem Ähnlichkeitsgrad geprüft, ob eine festgelegte Regel erfüllt ist, d. h. es wird geprüft, ob der Nutzer 2 zugangsberechtigt ist und sich so nah am Zugang 24 befindet, dass der Abstand $d_1$ kleiner oder gleich dem festgelegten Mindestabstand ist. Wie oben ausgeführt, ist das Erreichen oder Unterschreiten des Mindestabstands ein Indiz dafür, dass der Nutzer 2 zu diesem Zeitpunkt das Ausführen der gewünschten Gebäudeaktion wünscht.

Ist in Schritt S5 die Regel erfüllt, schreitet das Verfahren entlang des Ja-Zweigs zu Schritt S6 und die Gebäudeaktion wird veranlasst, wie im Folgenden ausgeführt. Das Verfahren endet danach in Schritt S7. Ist die Regel dagegen nicht erfüllt, schreitet das Verfahren entlang des Nein-Zweiges zurück zu Schritt S2.

In einem Ausführungsbeispiel ist die Gebäudeaktion spezifisch für den Nutzer 2, der zugangsberechtigt ist und sich zu diesem Zeitpunkt am Zugang 24 befindet. Die Gebäudeaktion kann beispielsweise darin bestehen, dass für den Nutzer 2 ein Zielruf (gemäss den Daten des für diesen Nutzer 2 bestehenden Nutzerprofils) ausgelöst wird, diesem Zielruf ein Aufzug zugewiesen wird und der zugewiesene Aufzug dem Nutzer 2 am Zugang 24 angezeigt wird. Die Gebäudeaktion kann auch darin bestehen, dass eine oder mehrere Türen entriegelt werden oder andere Barrieren 16 freigegeben werden, an denen dieser Nutzer 2 zugangsberechtigt ist. Der Fachmann erkennt, dass diese Gebäudeaktionen auch in Kombination ausgeführt werden können.

In einem Ausführungsbeispiel ist das Zugangskontrollsystem 1 mit einem Aufzugsystem verbunden, insbesondere mit der in Fig. 1 und Fig. 2 gezeigten Aufzugsteuerung 10. Die Kommunikation zwischen dem Zugangskontrollsystem 1 und der Aufzugsteuerung 10 kann über ein im Gebäude vorhandenes Kommunikationsnetzwerk erfolgen. Geschieht die Zugangskontrolle beispielsweise in der Eingangshalle des Gebäudes, die die Nutzer 2 passieren müssen, um zu den Aufzügen zu gelangen, kann bei jeder Zugangsgewährung für den betreffenden Nutzer 2 ein Zielruf veranlasst werden. Die Aufzugsteuerung 10 des Aufzugssystems verarbeitet den Zielruf und teilt ihm einen Aufzug (A - D in Fig. 1) zu. Der dem Zielruf zugeteilte Aufzug kann dem Nutzer 2 beispielsweise durch ein Terminal am Zugang 24 angezeigt und/oder mittels Sprache mitgeteilt werden. Der Nutzer 2 kann somit direkt zum zugeteilten Aufzug gehen, ohne einen Aufzugsruf eingeben zu müssen.

Je nach Ausgestaltung des Gebäudes und der Handhabung der Zugangsberechtigungen, kann das Zugangskontrollsystem 1 auch Besuchern Zugang gewähren und für die Besucher festgelegte Gebäudeaktionen veranlassen. In Verbindung mit der Aufzugssteuerung 10 kann beispielhafte als Gebäudeaktion ein Zielruf für den Besucher erzeugt werden. Ein zugewiesener Aufzug transportiert den Besucher auf das Stockwerk, auf dem sich der Gastgeber befindet. Das Stockwerk des Gastgebers ist beispielsweise in einem für den Besucher temporär angelegten Besucherprofil in Verbindung mit anderen Einladungsdaten (z. B. Datum, Zeit, Gastgeber) gespeichert. Der Besucher, vor allem wenn er erstmalig im Gebäude ist, braucht sich somit nicht mit der Eingabe des Zielstockwerks zu befassen. Dem Besucher kann außerdem weitere Information zur Verfügung gestellt werden, um sich im Gebäude besser orientieren zu können, beispielsweise kann dem Besucher mitgeteilt werden, in welche Richtung (eventuell auch wie weit) er nach dem Aussteigen auf dem Stockwerk gehen soll. Die Mitteilung solcher Wegeleitungs-Information kann beispielsweise mittels des mobilen Geräts 6 des Besuchers und/oder Anzeigen auf den Stockwerken oder in der Aufzugskabine erfolgen. In einem Ausführungsbeispiel erzeugt und sendet das Zugangskontrollsystem 1 eine Nachricht für den Gastgeber, die den Gastgeber darüber informiert, dass dem Besucher Zugang gewährt wurde. Der Gastgeber kann sich somit zeitnah auf das Erscheinen des Besuchers vorbereiten.

Wie oben erwähnt, zeigt Fig. 5 ein Ablaufdiagram mit detaillierteren Schritten des Verfahrens gemäss einem Ausführungsbeispiel. In Fig. 5 ist der in Fig. 4 gezeigte Schritt **S4** detaillierter durch Schritte **S4.1, S4.2, S4.3** dargestellt, die Schritte **S1-S3** und **S5-S7** entsprechen den in Fig. 4 gezeigten Schritten.

Im Schritt **S4.1** werden für jede Kanalimpulsantwort $h_1(\tau)$, $h_2(\tau)$ die Mehrwege-Signalkomponenten $SC(RF1)_k$, $SC(RF2)_k$ ermittelt, wie in Verbindung mit Fig. 3D und Fig. 3E erläutert. Im hier beschriebenen Ausführungsbeispiel werden jeweils vier Mehrwege-Signalkomponenten (K = 4) ermittelt.

In einem Schritt **S4.2** erfolgt ein paarweiser Vergleich der Mehrwege-Signalkomponenten $SC(RF1)_k$, $SC(RF2)_k$ der Kanalimpulsantworten $h_1(\tau)$, $h_2(\tau)$. Aus diesem Vergleich wird für jedes Paar P1 - P4 die zeitliche Abweichung $\Delta_k = \tau^{RF2}_k - \tau^{RF1}_k$ bestimmt, wie in Verbindung mit Fig. 3F erläutert ist.

In einem Schritt **S4.3** wird der Abstand $d_1$ bestimmt, den das mobile Gerät 6 momentan zur Sendeeinrichtung 4 bzw. dem Zugang 24 hat. Der Fachmann wählt die passende Gleichung für die Berechnung des Abstands $d_1$ abhängt davon, ob die Funksignale RF1, RF2 synchron oder asynchron sind, d. h. $d_1 = Es \cdot c \cdot \max\{|\Delta_1|, ..., |\Delta_K|\}$ für synchrone Funksignale RF1, RF2, und $d_1 = EA \cdot c/2 \cdot (\max\{\Delta_1, ..., \Delta_K\} - \min\{\Delta_1, ..., \Delta_K\})$ für asynchrone Funksignale RF1, RF2. Die anschliessende Prüfung, ob der so bestimmte Abstand $d_1$ kleiner oder gleich dem festgelegten Mindestabstand ist, erfolgt wie in Schritt **S5** beschrieben.

Abweichend von der in Fig. 1 gezeigten Situation, können sich gemäss der in Fig. 2 gezeigten Situation mehrere Nutzer 2 ($U_1, U_2, U_3, U_4$) in der öffentlichen Zone 22 aufhalten. Jeder dieser Nutzer 2 trägt ein mobiles Gerät 6 bei sich, das, wie oben beschrieben, ein Funksignal gemäss der im Gebäude verwendeten Funktechnologie sendet. Die Empfangseinrichtung 14 empfängt daher eine Vielzahl von weiteren Funksignalen. Für jedes der Funksignale wird eine weitere Kanalimpulsantwort bestimmt, die mit der ersten Kanalimpulsantwort $h_1(\tau)$ verglichen wird, um einen Abstand $d_1, d_2, d_3,$ da des jeweiligen elektrischen Geräts 6 zur Sendeeinrichtung 4 zu ermitteln. Damit kann erkannt werden, welcher Nutzer 2 ($U_1, U_2, U_3, U_4$) der Sendeeinrichtung 4 am nächsten ist, ob und wann der für diesen Nutzer 2 ermittelte Abstand $d_1, d_2, d_3,$ da kleiner oder gleich dem festgelegten Mindestabstand ist und, wenn dies der Fall ist, welche Gebäudeaktion für diesen Nutzer 2 auszuführen ist.

Wie oben erwähnt ist in einem Ausführungsbeispiel zusätzlich zur Empfangseinrichtung 14 die Empfangseinrichtung 14A vorhanden und mit der Signalverarbeitungseinrichtung 8 verbunden, wie in Fig. 2 gezeigt. Die Empfangseinrichtung 14A ist so angeordnet, dass sie das Funksignal RF1 der Sendeeinrichtung 4 empfängt. Befindet sich das mobile Gerät 6 in Empfangsreichweite zur Empfangseinrichtung 14A, empfängt auch diese das vom mobilen Gerät 6 ausgesendete Funksignal RF2.

Die Signalverarbeitungseinrichtung 8 verarbeitet somit Kanalimpulsantworten, die auf dem Empfang der Funksignale RF1, RF2 durch die Empfangseinrichtung 14A basieren. Die Verarbeitung umfasst die in Verbindung mit Fig. 3F beschriebene paarweise Bestim-

mung von Zeitdifferenzen $\Delta_k$ gemäss $\Delta_k = \tau^{RF2}{}_k - \tau^{RF1}{}_k$. Die Signalverarbeitungseinrichtung 8 verarbeitet zudem die Kanalimpulsantworten, die auf dem Empfang der Funksignale RF1, RF2 durch die Empfangseinrichtung 14 basieren, um Zeitdifferenzen $\Delta_k$ zu bestimmen. Aus der Gesamtheit dieser Zeitdifferenzen $\Delta_k$, d. h. basierend auf dem Empfang durch die Empfangseinrichtungen 14, 14A, wird das Paar bestimmt, für das die Zeitdifferenz $\Delta_k$ den grössten Betrag aufweist, d. h. $\max\{|\Delta_1|, ..., |\Delta_K|\}$. Die Weiterverarbeitung, um den Abstand zu bestimmen, erfolgt wie oben beschrieben. Ein Vorteil der Verwendung der zusätzlichen Empfangseinrichtung 14 ist, dass dadurch die Genauigkeit der Bestimmung des Abstands verbessert wird.

In Gebäuden und Situationen, die beispielsweise den in Fig. 1 und Fig. 2 gezeigten Situationen ähnlich sind, kann es zu Ausnahmesituationen kommen. Ein evtl. nicht berechtigter Nutzer kann einem berechtigten Nutzer 2, dem bereits Zugang gewährt wurde, so dicht folgen, dass dieser Nutzer quasi als Trittbrettfahrer u. U. unerkannt in die zugangsbeschränkte Zone 20 gelangt. Am in Fig. 1 gezeigten Drehkreuz (16), das zur Vereinzelung von Nutzern dient, kann sich der nicht berechtigte Nutzer evtl. hinter dem berechtigten Nutzer hindurchdrängeln. Eine andere Ausnahmesituation kann sich ergeben, wenn zusammengehörende Nutzer einer Gruppe Zugang zur Zone 20 wünschen. Die Nutzer dieser Gruppe können beispielsweise gemeinsam durch den Zugang 24 geschleust werden, um Verzögerungen so gering wie möglich zu halten. Die hier beschriebene Technologie kann in vorteilhafter Weise auch für diese Ausnahmesituationen eingesetzt werden.

Die hier beschriebene Technologie erkennt beispielsweise eine Trittbrettfahrer- oder Drängler-Situation. Die Technologie bestimmt mittels des in Verbindung mit Fig. 3F beschriebenen Vorgehens den Nutzer 2, der den geringsten Abstand $d_1$ zur Sendeeinrichtung 4 hat. Dieser Nutzer 2 ist z. B. zugangsberechtigt, so dass die gewünschte Gebäudeaktion veranlasst werden kann, wenn der Abstand $d_1$ kleiner oder gleich dem Mindestabstand ist. Um zu erkennen, ob sich ein anderer Nutzer sehr nahe beim Nutzer 2 befindet, d. h. ein Abstand zwischen dem Nutzer 2 und dem (Drängler-) Nutzer ist kleiner oder gleich einem Grenzwert, wird in dem oben beschriebenen Vorgehen für die Bestimmung der Zeitdifferenzen $\Delta_k$ eine andere Referenz verwendet. Das heisst, die Kanalimpulsantwort $h_1(\tau)$, die auf dem Funksignal RF1 der Sendeeinrichtung 4 basiert, wird durch die Kanalimpulsantwort $h_2(\tau)$, die auf dem Funksignal RF2 basiert, das das mobile Geräte 6 des (berechtigten) Nutzers 2 aussendet, ersetzt und als die Referenz für die Bestimmung der Zeitdifferenzen $\Delta_k$ verwendet.

Mit der Kanalimpulsantwort $h_2(\tau)$ als Referenz, wird für jedes weitere Funksignal der Ähnlichkeitsgrad bestimmt; je näher sich ein weiteres mobiles Gerät eines weiteren Nutzers zum mobilen Gerät 6 des berechtigten Nutzer 2 befindet, desto ähnlicher sind die entsprechenden Kanalimpulsantworten. Die Bestimmung des Abstands eines jeden weiteren Nutzers zum (berechtigten) Nutzer 2 erfolgt wie oben beschrieben. Ist ein derart bestimmter Abstand kleiner als der Grenzwert, wird angenommen, dass es sich bei dem entsprechenden Nutzer um einen Drängler handelt. In diesem Fall kann das Zugangskontrollsystem 1 beispielsweise eine Sicherheitsmassnahme veranlassen. Die Sicherheitsmassnahme kann ein Auslösen eines Alarms und/oder ein Alarmieren von Sicherheitspersonal umfassen.

Die hier beschriebene Technologie erkennt auch, wenn mehrere Nutzer relativ eng beieinanderstehen und eine Gruppe bilden. Das Erkennen beruht darauf, dass ein für Gruppen festgelegter Grenzwert erreicht oder unterschritten ist, z. B. weil sich die Nutzer kennen. Diese Gruppe kann sich beispielsweise abseits von anderen evtl. anwesenden Nutzern aufhalten. Ähnlich zur beschriebenen Trittbrettfahrer- oder Drängler-Situation, basiert das Erkennen einer Gruppen-Situation auf der Bestimmung von Inter-Nutzer Abständen, d. h., Abständen, die zwischen den Nutzern bestehen. In einem Ausführungsbeispiel wird mittels des in Verbindung mit Fig. 3F beschriebenen Vorgehens für jeden Nutzer der Abstand $d_1$ zur Sendeeinrichtung 4 bestimmt. Dabei ist die auf dem Funksignal RF1 basierende Kanalimpulsantwort $h_1(\tau)$ die Referenz. Aus diesen Abstandswerten kann z. B. ermittelt werden, welcher Nutzer der Sendeeinrichtung 4 am nächsten ist. Um die Abstände zwischen den Nutzern zu bestimmen, werden Paare von Kanalimpulsantworten, die auf von mobilen Geräten gesendeten Funksignalen basieren, analysiert. In jedem dieser Paare wird als Referenz eine der beiden Kanalimpulsantworten verwendet. Daraus ergibt sich eine Vielzahl von (Inter-Nutzer) Abstandswerten. Aus der Auswertung dieser Abstandswerte kann erkannt werden, ob und welche Nutzer sich nahe beieinander aufhalten. Diese Nutzer werden der Gruppe zugeordnet. Das Zugangskontrollsystem 1 kann auch in dieser Situation eine Sicherheitsmassnahme veranlassen, beispielsweise Sicherheitspersonal auffordern, die Nutzer in der Gruppe gemeinsam durchzuschleusen.

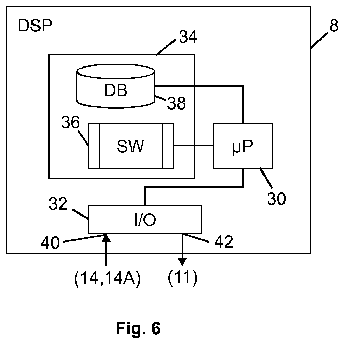

Fig. 6 ist eine schematische Darstellung eines Ausführungsbeispiels der Signalverarbeitungseinrichtung 8 des in Fig. 1 und Fig. 2 gezeigten Zugangskontrollsystems 1. Die Signalverarbeitungseinrichtung 8 umfasst eine Prozessoreinheit 30, eine Speichereinrichtung 34 und eine Schnittstelleneinrichtung 32 mit einem Signaleingang 40 und einem Signalausgang 42. Die Speichereinrichtung 34 ist ausgestaltet, um eine Messdatenbank 38 und ein Computerprogramm 36 zu speichern. Die Prozessoreinheit 30 ist mit der Speichereinrichtung 34 kommunikativ verbunden, um auf die Messdatenbank 38 und das Computerprogramm 36 gemäss der hier beschriebenen Technologie zuzugreifen. Die Prozessoreinheit 30 ist ausserdem mit der Schnittstelleneinrichtung 32 kommunikativ verbunden, um über einen Signaleingang 40 der Schnittstelleneinrichtung 32 Signale von der Empfangseinrichtung 14, 14A zu empfangen und über einen Signalausgang 42 der Schnittstelleneinrichtung 32 Signale zur der Steuerung 11 des Zugangskontrollsystems 1 zu senden.

In einem Ausführungsbeispiel ist die Signalverarbeitungseinrichtung 8 ausgestaltet, um die hier beschriebene Technologie in Verbindung mit einem oder mehreren Algorithmen für Maschinelles Lernen (auch als Machine Learning bezeichnet) anzuwenden, mit dem Ziel, einen Ähnlichkeitsgrad oder eine Distanz zu bestimmen. Das Computerprogramm 36 ist entsprechend programmiert, um den oder die Algorithmen in Verbindung mit der Prozessoreinheit 30 auszuführen. Bei der Ausführung greift die Prozessoreinheit 30 bzw. das Computerprogramm 36 auf eine oder mehrere in der Messdatenbank 38 gespeicherte Datensätze zu.

Algorithmen für Maschinelles Lernen bestehen typischerweise aus einer Trainingsphase und einer Einsatzphase. Beispielhafte Anwendungen dieser Phasen sind im Folgenden in Anlehnung an die in Fig. 1 und Fig. 2 gezeigten Situationen beschrieben, es handelt sich in der Trainingsphase allerdings um Testsituationen ohne konkrete Nutzer, wobei ein oder mehrere mobile Geräte 6 der Reihe nach an n Positionen (n = 1 ... N) positionierbar sind. Die Sendeeinrichtung 4 sendet das Funksignal RF1 und das mobile Gerät 6 das Funksignal RF2.

In der Trainingsphase wird das mobile Gerät 6 an einer ersten Position angeordnet, an dieser ersten Position wird der Abstand $d^{(n)}$ zur Sendeeinrichtung 4 gemessen und die sich dafür ergebenden Kanalimpulsantworten $h_1^{(n)}(\tau)$, $h_2^{(n)}(\tau)$ werden ermittelt. Wird wie in Fig. 2 gezeigt eine zweite Empfangseinrichtung 14A verwendet, wird ebenfalls der Abstand $d^{(n)}$ zur Sendeeinrichtung 4 gemessen, es werden aber zusätzlich zu den bezüglich der (ersten) Sendeeinrichtung 4 ermittelten Kanalimpulsantworten $h_{1,1}^{(n)}(\tau)$, $h_{2,1}^{(n)}(\tau)$ auch die Kanalimpulsantworten $h_{1,2}^{(n)}(\tau)$, $h_{2,2}^{(n)}(\tau)$ ermittelt, die sich bezüglich der (zweiten) Empfangseinrichtung 14A ergeben. Danach wird das mobile Gerät 6 an einer neuen Position angeordnet und der beschriebene Vorgang wird wiederholt, d. h. der Abstand $d^{(n)}$ wird gemessen und die Kanalimpulsantworten $h_1^{(n)}(\tau)$, $h_2^{(n)}(\tau)$ (bzw. $h_{1,1}^{(n)}(\tau)$, $h_{2,1}^{(n)}(\tau)$, $h_{1,2}^{(n)}(\tau)$, $h_{2,2}^{(n)}(\tau)$) werden bestimmt.

Die so gemessenen Abstände $d^{(n)}$ und die dazugehörigen Kanalimpulsantworten $h_1^{(n)}(\tau)$, $h_2^{(n)}(\tau)$ werden als Datensatz in der Messdatenbank 38 gespeichert. In einem Ausführungsbeispiel werden die Kanalimpulsantworten $h_1^{(n)}(\tau)$, $h_2^{(n)}(\tau)$ zu einem Vektor $X^{(n)}$ verarbeitet, entweder durch Aneinanderreihung der zeitdiskreten Messwerte, die Aneinanderreihung extrahierter Zeitdifferenzen und Spitzenwerten (s. Fig 3B - Fig. 3F) oder eine Aneinanderreihung von beidem. Das Computerprogramm 36 führt beispielsweise einen (Machine Learning) Algorithmus für Regression, z. B. ein Neuronales Netzwerk, aus, um aus dem Vektor $X^{(n)}$ und den Abständen $d^{(n)}$ eine Abbildungsfunktion f: X ----> d zu trainieren.

In der Einsatzphase, d. h., wenn der Abstand des Nutzers 2 zur Sendeeinrichtung 4 bestimmt werden soll, wird die in der Trainingsphase bestimmte Abbildungsfunktion f: X ----> d angewendet. Wie oben beschrieben, werden dabei die Kanalimpulsantworten $h_1(\tau)$, $h_2(\tau)$ fortlaufend bestimmt und nach demselben Verfahren wie in der Trainingsphase zu einem Vektor X verarbeitet. Die Abbildungsfunktion f : X ----> d wird zur Bestimmung des Abstands verwendet: d = f(X).

Die in den vorhergehenden Ausführungsbeispielen genannte Kennung des mobilen Geräts 6 eines zugangsberechtigten Nutzers 2, bzw. die Kennungen von anderen zugangsberechtigten Nutzern können in einem Ausführungsbeispiel in einer Speichereinrichtung des Zugangskontrollsystems 1 gespeichert sein. Der Fachmann erkennt, dass die Anzahl der in der öffentlichen Zone 22 anwesenden Nutzer 2 zeitlich variiert und dass die Speichereinrichtung aktualisiert wird, wenn ein mobiles Gerät 6 nicht mehr in Funkreichweite ist, z. B. weil der dazugehörige Nutzer 2 die öffentliche Zone 22 verlassen hat ohne Zugang zur zugangsbeschränkten Zone 20 zu wünschen oder weil der dazugehörige Nutzer 2 bereits die zugangsbeschränkte Zone 20 betreten hat. Die Speichereinrichtung speichert somit Datensätze für Nutzer 2, die zu einem bestimmten Zeitpunkt in der öffentlichen Zone 22 anwesend sind. Das Zugangskontrollsystem 1 "weiss" daher, wie viele mobile Geräte 6 sich zu einem bestimmten Zeitpunkt in Funkreichweite befinden und, wenn deren Nutzer 2 für das Gebäude registrierte Nutzer 2 sind, zu welchen Nutzern 2 die mobilen Geräte 6 gehören. Zu diesem Zeitpunkt kann das Zugangskontrollsystem 1 für jeden registrierten Nutzer 2 prüfen, welche Rechte für den Nutzer 2 im Gebäude festgelegt.

Für jeden registrierten Nutzer 2 ist im Zugangskontrollsystem 1 ein Nutzerprofil angelegt, d. h. es ist als Datensatz in einer Datenbank gespeichert. Das Nutzerprofil umfasst persönliche Daten des Nutzers 2 (z. B. Name, Berechtigungsgrund (Bewohner, Mitarbeiter, externer Dienstleister, Besucher)), Zugangsberechtigungen (z. B. bestimmte Räume 18 und Stockwerke) und evtl. zeitliche Zugangsbeschränkungen (z. B. Zugang von Montag bis Freitag, von 7:00 bis 20:00). Im Nutzerprofil ist dem Nutzer 2 ausserdem mindestens ein mobiles Gerät 6 zugeordnet. Alternativ zum Anlegen des Nutzerprofils im Zugangskontrollsystem 1 kann das Nutzerprofil in einer Datenbank eines Gebäudeverwaltungssystems angelegt sein, wobei das Zugangskontrollsystem 1 auf diese Datenbank mittels eines Kommunikationsnetzes zugreifen kann.

Das mobile Gerät 6 kann beispielsweise ein Mobiltelefon, ein Smartphone, ein Tablet PC oder eine Smartwatch sein, wobei diese Geräte üblicherweise mit Hardware ausgestattet sind, die eine Funkkommunikation ermöglichen. Das mobile Gerät 6 kann aber auch eine Brille mit Miniaturcomputer oder ein anderes am Körper getragenes, computergestütztes Gerät (auch als "Wearable Device" bezeichnet) sein. Je nach Ausgestaltung des mobilen Geräts 6 kann es z. B. über ein graphisches Nutzerinterface (auch als Graphical User Interface, GUI, bezeichnet) verfügen, um das mobile Gerät 6 und dessen Funktionen selektiv aktivieren und deaktivieren zu können.

**Patentansprüche**

1. Verfahren zum Betreiben eines Systems (1) zur Kontrolle eines Zugangs zu einer zugangsbeschränkten Zone (20) in einem Gebäude, wobei das System (1) eine Steuereinrichtung (10, 11), eine ortsfeste Sendeeinrichtung (4) für ein erstes Funksignal (RF1), eine Empfangseinrichtung (14) für Funksignale und eine mit der Empfangseinrichtung (14) kommunikativ verbundene Signalverarbeitungseinrichtung (8) umfasst, wobei das Verfahren umfasst:

   Bestimmen, durch die Signalverarbeitungseinrichtung (8), einer ersten Kanalimpulsantwort ($h_1(\tau)$) basierend auf dem durch die Empfangseinrichtung (14) empfangenen ersten Funksignal (RF1); und Ermitteln aus der ersten Kanalimpulsantwort ($h_1(\tau)$) eine erste Folge von zeitlich aufeinanderfolgenden ersten Mehrwege-Signalkomponenten ($SC(RF1)_k$)
   Bestimmen, durch die Signalverarbeitungseinrichtung (8), einer zweiten Kanalimpulsantwort ($h_2(\tau)$) basierend auf einem durch die Empfangseinrichtung (14) empfangenen zweiten Funksignal (RF2), wobei das zweite Funksignal (RF2) von einem ersten mobilen elektronischen Gerät (6) eines ersten Nutzers (2) gesendet wird, und Ermitteln aus der zweiten Kanalimpulsantwort ($h_2(\tau)$) eine zweite Folge von zeitlich aufeinanderfolgenden zweiten Mehrwege-Signalkomponenten ($SC(RF2)_k$);
   Bestimmen, durch die Signalverarbeitungseinrichtung (8), eines Ähnlichkeitsgrads ($SD_S$, $SD_A$) mittels einer Auswertung der ersten Kanalimpulsantwort ($h_1(\tau)$) und der zweiten Kanalimpulsantwort ($h_2(\tau)$), wobei der Ähnlichkeitsgrad ($SD_S$, $SD_A$) angibt, wie ähnlich die erste Kanalimpulsantwort ($h_1(\tau)$) und die zweite Kanalimpulsantwort ($h_2(\tau)$) zueinander sind, wobei die Auswertung der ersten und zweiten Kanalimpulsantworten ($h_1(\tau)$, $h_2(\tau)$) ein paarweises Vergleichen, gemäss der Reihenfolge in der ersten und zweiten Folge, einer jeden zweiten Mehrwege-Signalkomponente ($SC(RF2)_k$) mit ihrer, der Reihenfolge entsprechenden ersten Mehrwege-Signalkomponente ($SC(RF1)_k$) umfasst, um für jedes Paar (P1, P2, P3, P4) eine zeitliche Abweichung ($\Delta_k$) zu bestimmen, sodass eine maximale zeitliche Abweichung ($\Delta_k$) und eine minimale zeitliche Abweichung ($\Delta_k$) vorliegen, wobei der Ähnlichkeitsgrad ($SD_S$, $SD_A$) auf mindestens einer dieser zeitlichen Abweichungen ($\Delta_k$) basiert; und
   Veranlassen einer Gebäudeaktion durch die Steuereinrichtung (11), wenn basierend auf dem Ähnlichkeitsgrad ($SD_S$, $SD_A$) eine festgelegte Regel erfüllt ist,
wobei die Funksignale (RF1, RF2) eine Bandbreite von mindestens 500 MHz haben und gemäss einem WLAN/WiFi Standard oder einem Standard für eine Ultra-Breitband Technologie gesendet und empfangen werden.

2. Verfahren nach Anspruch 1, ausserdem umfassend Ermitteln einer ersten Kennung des ersten mobilen elektronischen Geräts (6) aus dem zweiten Funksignal (RF2), wobei die erste Kennung einem Nutzerprofil zugeordnet ist, wenn der erste Nutzer (2) zur zugangsbeschränkten Zone (20) zugangsberechtigt ist, wobei im Nutzerprofil eine nutzerspezifische Gebäudeaktion gespeichert ist.

3. Verfahren nach einem der vorhergehenden Ansprüche, beim dem die Gebäudeaktion ein Freigeben einer Barriere (16), an der der erste Nutzer (2) zugangsberechtigt ist, oder ein Registrieren eines Zielrufs in einer Aufzugsanlage auf ein für den ersten Nutzer (2) festgelegtes Zielstockwerk, oder eine Kombination aus dem Freigeben einer Barriere (16) und dem Registrieren eines Zielrufs umfasst.

4. Verfahren nach Anspruch 1, bei dem das erste Funksignal (RF1) und das zweite Funksignal (RF2) eine gemeinsame Zeitreferenz haben, wobei das Verfahren ausserdem umfasst:

   Ermitteln eines ersten Abstands ($d_1$), den das erste mobile elektronische Gerät (6) des ersten Nutzers (2) von der Sendeeinrichtung (4) hat, gemäss

   $$d_1 = E_S \cdot c \cdot SD_S,$$

   dabei sind: c die Lichtgeschwindigkeit, $E_S = (K + 1)/K$ ein Korrekturfaktor und $SD_S = \max\{|\Delta_1|, ..., |\Delta_k|\}$ der Ähnlichkeitsgrad bei gemeinsamer Zeitreferenz; und
   Veranlassen der Gebäudeaktion, wenn der erste Abstand (di) kleiner oder gleich einem festgelegten Mindestabstand ist.

5. Verfahren nach Anspruch 1, bei dem das erste Funksignal (RF1) und das zweite Funksignal (RF2) keine gemeinsame Zeitreferenz haben, wobei das Verfahren ausserdem umfasst:

   Ermitteln eines ersten Abstands ($d_1$), den das erste mobile elektronische Gerät (6) des ersten Nutzers (2) von der Sendeeinrichtung (4) hat, gemäss

$$d_1 = E_A \cdot c/2 \cdot SD_A,$$

dabei sind: c die Lichtgeschwindigkeit, $E_A = (K + 1)/(K - 1)$ ein Korrekturfaktor und $SD_A = (\max\{\Delta_1, ..., \Delta_K\} - \min\{\Delta_1, ..., \Delta_K\})$ der Ähnlichkeitsgrad bei keiner gemeinsamen Zeitreferenz; und

Veranlassen der Gebäudeaktion, wenn der erste Abstand (di) kleiner oder gleich einem festgelegten Mindestabstand ist.

6. Verfahren nach Anspruch 4 oder 5, wobei die Empfangseinrichtung (14) eine Anzahl von weiteren Funksignalen empfängt, die von einer Anzahl von weiteren mobilen elektronischen Geräten (6) ausgesendet werden, wobei basierend auf jedem empfangenen weiteren Funksignal eine Kanalimpulsantwort bestimmt wird, die in Verbindung mit der ersten Kanalimpulsantwort (hi(r)) ausgewertet wird, um einen Abstand $(d_1, d_2, d_3, d_4)$ des entsprechenden weiteren mobilen elektronischen Geräts (6) zur Sendeeinrichtung (4) zu ermitteln, wobei für jeden ermittelten Abstand $(d_1, d_2, d_3, d_4)$ geprüft wird, ob er kleiner oder gleich dem festgelegten Mindestabstand ist.

7. Verfahren nach Anspruch 6, ausserdem aufweisend, wenn einer der ermittelten Abstände $(d_1, d_2, d_3, d_4)$ kleiner oder gleich dem festgelegten Mindestabstand ist und für den Nutzer (2) des entsprechenden mobilen elektronischen Geräts (6), dem eine entsprechende Kanalimpulsantwort zugeordnet ist, die Gebäudeaktion veranlasst wird,

Bestimmen mindestens eines weiteren Ähnlichkeitsgrads basierend auf der entsprechenden Kanalimpulsantwort und einer Kanalimpulsantwort, die einem Funksignal eines weiteren mobilen elektronischen Geräts (6) zugeordnet ist,
Ermitteln eines Geräteabstands zwischen dem entsprechenden mobilen elektronischen Gerät (6) und dem weiteren mobilen elektronischen Gerät (6), und
Veranlassen einer Sicherheitsmassnahme, wenn der Geräteabstand kleiner oder gleich einem festgelegten Geräteabstand ist.

8. Verfahren nach Anspruch 6, ausserdem aufweisend:

Auswerten von Kanalimpulsantworten, die jeweils einem Funksignal eines weiteren mobilen elektronischen Geräts (6) zugeordnet sind, wobei das Auswerten ein paarweises Berechnen von Ähnlichkeitsgraden umfasst, um Abstände zwischen den mobilen elektronischen Geräten (6) zu ermitteln,
Vergleichen der Abstände mit einem festgelegten Nutzerabstand, und
Zuordnen von Nutzern (2) zu einer zusammengehörigen Gruppe, wenn deren mobilen elektronischen Geräte (6) jeweils einen Abstand voneinander haben, der kleiner oder gleich dem festgelegten Nutzerabstand ist.

9. Verfahren nach einem der vorhergehenden Ansprüche, bei dem in der Signalverarbeitungseinrichtung (8) eine Speichereinrichtung (34) vorhanden ist, in der eine Messdatenbank (38) und ein Computerprogramm (36) gespeichert sind,

wobei die Messdatenbank (38) einen in einer Trainingsphase bestimmten Datensatz speichert, wobei der Datensatz eine Vielzahl von gemessenen Abständen eines mobilen elektronischen Geräts (6) von der Sendeeinrichtung (4) und für jeden der gemessenen Abstände gemessene Kanalimpulsantworten $(h_1(\tau), h_2(\tau))$ umfasst,
wobei das Computerprogramm (36) in der Trainingsphase einen Algorithmus für Maschinelles Lernen ausführt, um aus den Datensätzen eine Funktion zu ermitteln, die die gemessenen Kanalimpulsantworten $(h_1(\tau), h_2(\tau))$ auf die gemessenen Abstände abbildet,
wobei das Verfahren ausserdem umfasst, Anwenden der in der Trainingsphase ermittelten Funktion auf die ersten und zweiten Kanalimpulsantworten $(h_1(\tau), h_2(\tau))$, um daraus einen Abstand des mobilen elektronischen Geräts (6) von der Sendeeinrichtung (4) zu ermitteln.

10. System (1) zur Kontrolle eines Zugangs zu einer zugangsbeschränkten Zone (20) in einem Gebäude, wobei das System (1) umfasst:

eine ortsfeste Sendeeinrichtung (4) zum Senden eines ersten Funksignals (RF1);
eine Empfangseinrichtung (14) für Funksignale (RF1, RF2);
eine Steuereinrichtung (10, 11); und
eine Signalverarbeitungseinrichtung (8), die mit der Empfangseinrichtung (14) und der Steuereinrichtung (10, 11) kommunikativ verbunden ist,
wobei die Signalverarbeitungseinrichtung (8) ausgestaltet ist,

- um eine erste Kanalimpulsantwort $(h_1(\tau))$ basierend auf einem durch die Empfangseinrichtung (14) empfangenen ersten Funksignal (RF1) zu bestimmen und aus der ersten Kanalimpulsantwort $(h_1(\tau))$ eine erste Folge von zeitlich aufeinanderfolgenden ersten Mehrwege-Signalkomponenten (SC(RF1)$_k$) zu ermitteln,

- um eine zweite Kanalimpulsantwort (h$_2$($\tau$)) basierend auf einem durch die Empfangseinrichtung (14) empfangenen zweiten Funksignal (RF2) zu bestimmen und aus der zweiten Kanalimpulsantwort (h$_2$($\tau$)) eine zweite Folge von zeitlich aufeinanderfolgenden zweiten Mehrwege-Signalkomponenten (SC(RF2)$_k$) zu ermitteln, wobei das zweite Funksignal (RF2) von einem ersten mobilen elektronischen Gerät (6) eines ersten Nutzers (2) gesendet wird, und

- um einen Ähnlichkeitsgrad mittels einer Auswertung der ersten Kanalimpulsantwort (h$_1$($\tau$)) und der zweiten Kanalimpulsantwort (h$_2$($\tau$)) zu bestimmen, wobei der Ähnlichkeitsgrad (SD$_S$, SD$_A$) angibt, wie ähnlich die erste Kanalimpulsantwort (h$_1$($\tau$)) und die zweite Kanalimpulsantwort (h$_2$($\tau$)) zueinander sind, wobei die Auswertung der ersten und zweiten Kanalimpulsantworten (h$_1$($\tau$), h$_2$($\tau$)) ein paarweises Vergleichen, gemäss der Reihenfolge in der ersten und zweiten Folge, einer jeden zweiten Mehrwege-Signalkomponente (SC(RF2)$_k$) mit ihrer, der Reihenfolge entsprechenden ersten Mehrwege-Signalkomponente (SC(RF1)$_k$) umfasst, um für jedes Paar (P1, P2, P3, P4) eine zeitliche Abweichung ($\Delta_k$) zu bestimmen, sodass eine maximale zeitliche Abweichung ($\Delta_k$) und eine minimale zeitliche Abweichung ($\Delta_k$) vorliegen, wobei der Ähnlichkeitsgrad (SD$_S$, SD$_A$) auf mindestens einer dieser zeitlichen Abweichungen ($\Delta_k$) basiert;

wobei die Steuereinrichtung (10, 11) ausgestaltet ist, um eine Gebäudeaktion zu veranlassen, wenn basierend auf dem Ähnlichkeitsgrad eine festgelegte Regel erfüllt ist, und wobei die Funksignale (RF1, RF2) eine Bandbreite von mindestens 500 MHz haben und gemäss einem WLAN/WiFi Standard oder einem Standard für eine Ultra-Breitband Technologie gesendet und empfangen werden.

11. System (1) nach Anspruch 10, bei dem das erste Funksignal (RF1) und das zweite Funksignal (RF2) eine gemeinsame Zeitreferenz haben, wobei die Signalverarbeitungseinrichtung (8) ausgestaltet ist:

um einen ersten Abstand (d$_1$) zu ermitteln, den das erste mobile Gerät (6) des ersten Nutzers (2) von der Sendeeinrichtung (4) hat, gemäss

$$d_1 = E_S \cdot c \cdot SD_S,$$

dabei sind: c die Lichtgeschwindigkeit, E$_S$ = (K + 1)/K und

$$SD_S = \max\{\,|\Delta_1|\,, ..., |\Delta_K|\,\};$$

und
um die Gebäudeaktion zu veranlassen, wenn der erste Abstand (di) kleiner oder gleich einem festgelegten Mindestabstand ist.

12. System (1) nach Anspruch 10, bei dem das erste Funksignal (RF1) und das zweite Funksignal (RF2) keine gemeinsame Zeitreferenz haben, wobei die Signalverarbeitungseinrichtung (8) ausgestaltet ist:

um einen ersten Abstand (di) zu ermitteln, den das erste mobile Gerät (6) des ersten Nutzers (2) von der Sendeeinrichtung (4) hat, gemäss

$$d_1 = E_A \cdot c/2 \cdot SD_A,$$

dabei sind: c die Lichtgeschwindigkeit, E$_A$ = (K + 1)/(K - 1) und

$$SD_A = (\max\{\Delta_1, ..., \Delta_K\} - \min\{\Delta_1, ..., \Delta_K\});$$

und
um die Gebäudeaktion zu veranlassen, wenn der erste Abstand (di) kleiner oder gleich einem festgelegten Mindestabstand ist.

**Claims**

1. A method for operating a system (1) for controlling access to an access-restricted zone (20) in a building, the system (1) comprising a control device (10, 11), a stationary transmitting device (4) for a first radio signal (RF1), a receiving device (14) for radio signals, and a signal processing device (8) communicatively connected to the receiving device (14), the method comprising:

determining, by means of the signal processing device (8), a first channel impulse response (h$_1$($\tau$)) based on the first radio signal (RF1) received by the receiving device (14); and ascertaining from the first channel impulse response (h$_1$($\tau$)) a first sequence of temporally successive first multi-path signal components (SC(RF1)$_k$), determining, by means of the signal processing device (8), a second channel impulse response (h$_2$($\tau$)) based on a second radio signal (RF2) received by the receiving device (14), the second radio signal (RF2) being transmitted from a first mobile electronic device (6) of a first user (2), and ascertaining from the second channel impulse response ($h_2(\tau)$) a second sequence of temporally successive second multi-path signal components ($SC(RF2)_k$);

determining, by means of the signal processing device (8), a degree of similarity ($SD_s$, $SD_A$) by means of an evaluation of the first channel impulse response ($h_1(\tau)$) and the second channel impulse response ($h_2(\tau)$), the degree of similarity ($SD_s$, $SD_A$) indicating how similar the first channel impulse response ($h_1(\tau)$) and the second channel impulse response ($h_2(\tau)$) are, the evaluation of the first and second channel impulse responses ($h_1(\tau)$, $h_2(\tau)$) involving comparing in pairs, according to the order in the first and second sequence, each second multi-path signal component ($SC(RF2)_k$) with its first multi-path signal component ($SC(RF1)_k$) corresponding to the sequence in order to determine, for each pair (P1, P2, P3, P4), a temporal deviation ($\Delta_k$) such that a maximum temporal deviation ($\Delta_k$) and a minimum time deviation ($\Delta_k$) are present, the degree of similarity ($SD_s$, $SD_A$) being based on at least one of these temporal deviations ($\Delta_k$); and

initiating a building action by means of the controller (11) when a specified rule is met based on the degree of similarity ($SD_s$, $SD_A$), the radio signals (RF1, RF2) having a bandwidth of at least 500 MHz and being transmitted and received according to a WLAN/WiFi Standard or a standard for ultra-broadband technology.

2. The method according to claim 1, further comprising ascertaining a first identifier of the first mobile electronic device (6) from the second radio signal (RF2), the first identifier being assigned to a user profile if the first user (2) is authorized to access the access-restricted zone (20), a user-specific building action being stored in the user profile.

3. The method according to one of the preceding claims, wherein the building action involves releasing a barrier (16) which the first user (2) is authorized to access, or registering, in an elevator system, a destination call to a destination floor specified for the first user (2), or a combination consisting of releasing a barrier (16) and registering a destination call.

4. The method according to claim 1, wherein the first radio signal (RF1) and the second radio signal (RF2) have a common time reference, the method also comprising: ascertaining a first distance (di) of the first mobile electronic device (6) of the first user (2) from the transmitting device (4) according to

$$d_1 = E_s \cdot c \cdot SD_s,$$

where: c is the speed of light, $E_s = (K + 1)/K$ is a correction factor and $SD_s = \max\{|\Delta_1|, ..., |\Delta_K|\}$ is the degree of similarity with a common time reference; and

initiating the building action if the first distance (di) is shorter than or equal to a specified minimum distance.

5. The method according to claim 1, wherein the first radio signal (RF1) and the second radio signal (RF2) have no common time reference, the method also comprising: ascertaining a first distance (di) of the first mobile electronic device (6) of the first user (2) from the transmitting device (4) according to

$$d_1 = E_A \cdot c/2 \cdot SD_A,$$

where: c is the speed of light, $E_A = (K + 1)/(K - 1)$ is a correction factor and $SD_A = (\max\{\Delta_1, ..., \Delta_K\} - \min\{\Delta_1, ..., \Delta_K\})$ is the degree of similarity with no common time reference; and

initiating the building action if the first distance (di) is shorter than or equal to a specified minimum distance.

6. The method according to claim 4 or 5, the receiving device (14) receiving a number of further radio signals which are transmitted by a number of further mobile electronic devices (6), a channel impulse response being determined based on each received further radio signal, which channel impulse response is evaluated in conjunction with the first channel impulse response ($h_1(\tau)$) to ascertain a distance ($d_1$, $d_2$, $d_3$, $d_4$) of the corresponding further mobile electronic device (6) to the transmitting device (4), a check being carried out for each ascertained distance ($d_1$, $d_2$, $d_3$, $d_4$) as to whether it is shorter than or equal to the specified minimum distance.

7. The method according to claim 6, also including, when one of the ascertained distances ($d_1$, $d_2$, $d_3$, $d_4$) is shorter than or equal to the specified minimum distance and the building action is initiated for the user (2) of the corresponding mobile electronic device (6) to which a corresponding channel impulse response is assigned, determining at least one further degree of similarity based on the corresponding channel impulse response and a channel impulse response assigned to a radio signal from a further mobile electronic device (6), ascertaining a device distance between the corresponding mobile electronic device (6) and the further mobile electronic device (6), and initiating a security measure when the device distance is shorter than or equal to a specified device distance.

8. The method according to claim 6, also including:

evaluating channel impulse responses which are each assigned to a radio signal from a further mobile electronic device (6), the evaluation comprising calculating degrees of similarity in pairs in order to ascertain distances between the mobile electronic devices (6), comparing the distances with a specified user distance, and assigning users (2) to a single group if their mobile electronic devices (6) are each at a distance from one another that is shorter than or equal to the specified user distance.

9. The method according to one of the preceding claims, wherein a storage device (34) in which a measurement database (38) and a computer program (36) are stored is present in the signal processing device (8),

the measurement database (38) storing a data set determined in a training phase, the data set comprising a plurality of measured distances of a mobile electronic device (6) from the transmitting device (4) and channel impulse responses $(h_1(\tau), h_2(\tau))$ measured for each of the measured distances,

the computer program (36) executing a machine learning algorithm in the training phase in order to ascertain a function from the data sets, which function maps the measured channel impulse responses $(h_1(\tau), h_2(\tau))$ to the measured distances,

the method also comprising applying the function ascertained in the training phase to the first and second channel impulse responses $(h_1(\tau), h_2(\tau))$ in order to ascertain therefrom a distance of the mobile electronic device (6) from the transmitting device (4).

10. A system (1) for controlling access to an access-restricted zone (20) in a building, the system (1) comprising:

a stationary transmitting device (4) for transmitting a first radio signal (RF1);
a receiving device (14) for radio signals (RF1, RF2);
a control device (10, 11); and
a signal processing device (8) which is communicatively connected to the receiving device (14) and the control device (10, 11),
the signal processing device (8) being configured

- to determine a first channel impulse response $(h_1(\tau))$ based on a first radio signal (RF1) received by the receiving device (14) and to ascertain, from the first channel impulse response $(h_1(\tau))$, a first sequence of temporally successive first multi-path signal components $(SC(RF1)_k)$,
- to determine a second channel impulse response $(h_2(\tau))$ based on a second radio signal (RF2) received by the receiving device (14) and to ascertain, from the second channel impulse response $(h_2(\tau))$, a second sequence of temporally successive second multi-path signal components $(SC(RF2)_k)$, the second radio signal (RF2) being transmitted from a first mobile electronic device (6) of a first user (2), and
- to determine a degree of similarity by means of an evaluation of the first channel impulse response $(h_1(\tau))$ and the second channel impulse response $(h_2(\tau))$, the degree of similarity $(SD_s, SD_A)$ indicating how similar the first channel impulse response $(h_1(\tau))$ and the second channel impulse response $(h_2(\tau))$ are, the evaluation of the first and second channel impulse responses $(h_1(\tau), h_2(\tau))$ involving comparing in pairs, according to the order in the first and second sequence, each second multi-path signal component $(SC(RF2)_k)$ with its first multi-path signal component $(SC(RF1)_k)$ corresponding to the sequence in order to determine, for each pair (P1, P2, P3, P4), a temporal deviation $(\Delta_k)$ such that a maximum temporal deviation $(\Delta_k)$ and a minimum temporal deviation $(\Delta_k)$ are present, the degree of similarity $(SD_s, SD_A)$ being based on at least one of these temporal deviations $(\Delta_k)$;

the control device (10, 11) being configured to initiate a building action if a specified rule is met based on the degree of similarity, and
the radio signals (RF1, RF2) having a bandwidth of at least 500 MHz and being transmitted and received according to a WLAN/WiFi standard or a standard for ultra-broadband technology.

11. The system (1) according to claim 10, wherein the first radio signal (RF1) and the second radio signal (RF2) have a common time reference, the signal processing device (8) being configured:

to ascertain a first distance (di) of the first mobile device (6) of the first user (2) from the transmitting device (4) according to

$$d_1 = E_s \cdot c \cdot SD_s,$$

where: c is the speed of light, $E_s = (K + 1)/K$ and $SDs = \max\{|\Delta_1|, ..., |\Delta_K|\}$; and
to initiate the building action if the first distance (di) is shorter than or equal to a specified minimum distance.

**12.** The system (1) according to claim 10, wherein the first radio signal (RF1) and the second radio signal (RF2) have no common time reference, the signal processing device (8) being configured:

to ascertain a first distance (di) of the first mobile device (6) of the first user (2) from the transmitting device (4) according to

$$d_1 = E_A \cdot c/2 \cdot SD_A,$$

where: c is the speed of light, $E_A$ = (K + 1)/(K - 1) and
$SD_A$ = (max{$\Delta_1$, ..., $\Delta_K$} - min{$\Delta_1$, ..., $\Delta_K$}); and
to initiate the building action if the first distance (di) is shorter than or equal to a specified minimum distance.

## Revendications

**1.** Procédé pour faire fonctionner un système (1) de contrôle d'un accès à une zone d'accès restreint (20) dans un bâtiment, le système (1) comprenant un dispositif de commande (10, 11), un dispositif d'émission (4) fixe pour un premier signal radio (RFI), un dispositif de réception (14) pour signaux radio et un dispositif de traitement de signaux (8) connecté de manière communicative au dispositif de réception (14), le procédé comprenant :

la détermination, à travers le dispositif de traitement de signaux (8), d'une première réponse d'impulsion de canal ($h_1(\tau)$) sur la base du premier signal radio (RF1) reçu par le dispositif de réception (14) ; et la détermination à partir de la première réponse d'impulsion de canal ($h_1(\tau)$) d'une première séquence de premiers composants de signal multivoie successifs dans le temps ($SC(RF1)_k$)
la détermination, à travers le dispositif de traitement de signaux (8), d'une deuxième réponse d'impulsion de canal ($h_2(\tau)$) sur la base d'un deuxième signal radio (RF2) reçu par le dispositif de réception (14), le deuxième signal radio (RF2) étant émis par un premier appareil électronique mobile (6) d'un premier utilisateur (2), et la détermination à partir de la deuxième réponse d'impulsion de canal ($h_2(\tau)$) d'une deuxième séquence de deuxièmes composants de signal multivoie successifs dans le temps ($SC(RF2)_k$) ;
la détermination, à travers le dispositif de traitement de signaux (8), d'un degré de similitude ($SD_s$, $SD_A$) au moyen d'une évaluation de la première réponse d'impulsion de canal ($h_1(\tau)$) et de la deuxième réponse d'impulsion de canal ($h_2(\tau)$), le degré de similitude ($SD_s$, $SD_A$) indiquant à quel point la première réponse d'impulsion de canal ($h_1(\tau)$) et la deuxième réponse d'impulsion de canal ($h_2(\tau)$) sont similaires l'une à l'autre, l'évaluation des première et deuxième réponses d'impulsion de canal ($h_1(\tau)$, $h_2(\tau)$) comprenant une comparaison par paires, selon l'ordre de la première et de la deuxième séquence, de chaque deuxième composant de signal multivoie ($SC(RF2)_k$) avec son premier composant de signal multivoie ($SC(RF1)_k$) correspondant selon l'ordre, afin de déterminer pour chaque paire (P1, P2, P3, P4) un décalage temporel ($\Delta_k$) de sorte qu'il y ait un décalage temporel ($\Delta_k$) maximal et un décalage temporel ($\Delta_k$) minimal, le degré de similitude ($SD_s$, $SD_A$) étant basé sur au moins un de ces décalages temporels ($\Delta_k$) ; et
le déclenchement d'une action de bâtiment par le dispositif de commande (11), lorsque, sur la base du degré de similitude ($SD_s$, $SD_A$), une règle définie est satisfaite, les signaux radio (RF1, RF2) ayant une largeur de bande d'au moins 500 MHz et étant émis et reçus conformément à une norme WLAN/WiFi ou à une norme pour une technologie de bande ultra-large.

**2.** Procédé selon la revendication 1, comprenant en outre la détermination d'un premier identifiant du premier appareil électronique mobile (6) à partir du deuxième signal radio (RF2), le premier identifiant étant associé à un profil utilisateur si le premier utilisateur (2) est autorisé à accéder à la zone d'accès restreint (20), une action de bâtiment spécifique à l'utilisateur étant enregistrée dans le profil utilisateur.

**3.** Procédé selon l'une quelconque des revendications précédentes, dans lequel l'action de bâtiment comprend la libération d'une barrière (16) à laquelle le premier utilisateur (2) est autorisé d'accéder, ou l'enregistrement d'un appel de destination dans une installation d'ascenseur à un étage de destination défini pour le premier utilisateur (2), ou une combinaison de la libération d'une barrière (16) et de l'enregistrement d'un appel de destination.

**4.** Procédé selon la revendication 1, dans lequel le premier signal radio (RF1) et le deuxième signal radio (RF2) ont une référence de temps commune, le procédé comprenant en outre :

la détermination d'une première distance ($d_1$), à laquelle le premier appareil électronique mobile (6) du premier utilisateur (2) se trouve par rapport au dispositif d'émission (4), selon

$$d_1 = E_s \cdot c \cdot SD_s,$$

où : c est la vitesse de la lumière, $E_s = (K + 1)/K$ est un facteur de correction et $SD_s = \max\{|\Delta_1|, ..., |\Delta_K|\}$ est le degré de similitude pour une référence de temps commune ; et

le déclenchement de la réaction de bâtiment, lorsque la première distance ($d_1$) est inférieure ou égale à une distance minimale fixée.

5. Procédé selon la revendication 1, dans lequel le premier signal radio (RF1) et le deuxième signal radio (RF2) n'ont aucune référence de temps commune, le procédé comprenant en outre :

la détermination d'une première distance ($d_1$), à laquelle le premier appareil électronique mobile (6) du premier utilisateur (2) se trouve par rapport au dispositif d'émission (4), selon

$$d_1 = E_A \cdot c/2 \cdot SD_A,$$

où : c est la vitesse de la lumière, $E_A = (K + 1)/(K - 1)$ est un facteur de correction et $SD_A = (\max\{\Delta_1, ..., \Delta_K\} - \min\{\Delta_1, ..., \Delta_K\})$ est le degré de similitude pour aucune référence de temps commune ; et

le déclenchement de la réaction de bâtiment, lorsque la première distance ($d_1$) est inférieure ou égale à une distance minimale fixée.

6. Procédé selon la revendication 4 ou 5, le dispositif de réception (14) recevant un nombre d'autres signaux radio, qui sont émis par un nombre d'autres appareils électroniques mobiles (6), une réponse d'impulsion de canal étant déterminée sur la base de chaque autre signal radio reçu, laquelle est évaluée en connexion avec la première réponse d'impulsion de canal ($h_1(\tau)$), pour déterminer une distance ($d_1$, $d_2$, $d_3$, $d_4$) de l'autre appareil électronique mobile (6) au dispositif d'émission (4), il étant vérifié pour chaque distance ($d_1$, $d_2$, $d_3$, $d_4$) déterminée, si elle est inférieure ou égale à la distance minimale fixée.

7. Procédé selon la revendication 6, présentant en outre, lorsqu'une des distances ($d_1$, $d_2$, $d_3$, $d_4$) déterminées est inférieure ou égale à la distance minimale fixée et que pour l'utilisateur (2) de l'appareil électronique mobile (6) correspondant, auquel une réponse d'impulsion de canal correspondante est associée, l'action de bâtiment est déclenchée, la détermination d'au moins un autre degré de similitude sur la base de la réponse d'impulsion de canal correspondante et d'une réponse d'impulsion de canal qui est associée à un signal radio d'un autre appareil électronique mobile (6), la détermination d'une distance d'appareils entre l'appareil électronique mobile (6) correspondant et l'autre appareil électronique mobile (6), et le déclenchement d'une mesure de sécurité, lorsque la distance d'appareils est inférieure ou égale à une distance d'appareils fixée.

8. Procédé selon la revendication 6, présentant en outre :

l'évaluation de réponses d'impulsion de canal, qui sont associées respectivement à un signal radio d'un autre appareil électronique mobile (6), l'évaluation comprenant un calcul par paires de degrés de similitude, pour déterminer les distances entre les appareils électroniques mobiles (6),
la comparaison des distances à une distance d'utilisateurs fixée, et
l'association d'utilisateurs (2) à un groupe apparenté, lorsque leurs appareils électroniques mobiles (6) ont respectivement une distance entre eux qui est inférieure ou égale à la distance d'utilisateurs fixée.

9. Procédé selon l'une quelconque des revendications précédentes, dans lequel un dispositif de mémoire (34) est présent dans le dispositif de traitement de signaux (8), dans lequel une base de données de mesures (38) et un programme informatique (36) sont enregistrés,

la base de données de mesures (38) enregistre un ensemble de données déterminé lors d'une phase de formation, l'ensemble de données comprenant une pluralité de distances mesurées d'un appareil électronique mobile (6) au dispositif d'émission (4) et pour chacune des distances mesurées des réponses d'impulsion de canal ($h_1(\tau)$, $h_2(\tau)$),
le programme informatique (36) exécutant durant la phase de formation un algorithme d'apprentissage machine, pour déterminer à partir des ensembles de données une fonction qui met en correspondance les réponses d'impulsion de canal ($h_1(\tau)$, $h_2(\tau)$) avec les distances mesurées,
le procédé comprenant en outre l'utilisation de la fonction déterminée durant la phase de formation sur les première et deuxième réponses d'impulsion de canal ($h_1(\tau)$, $h_2(\tau)$), pour en déterminer une distance de l'appareil électronique mobile (6) au dispositif d'émission (4).

10. Système (1) de contrôle d'un accès à une zone à accès limité (20) dans un bâtiment, comprenant :

un dispositif d'émission (4) fixe pour l'émission d'un premier signal radio (RF1) ;

un dispositif de réception (14) pour signaux radio (RF1, RF2) ;

un dispositif de commande (10, 11) ; et

un dispositif de traitement de signaux (8), qui est connecté de manière communicative au dispositif de réception (14) et au dispositif de commande (10, 11),

le dispositif de traitement de signaux (8) étant conçu

- pour déterminer une première réponse d'impulsion de canal ($h_1(\tau)$) sur la base du premier signal radio (RFI) reçu par le dispositif de réception (14) et pour déterminer à partir de la première réponse d'impulsion de canal ($h_1(\tau)$) d'une première séquence de premiers composants de signal multivoie successifs dans le temps ($SC(RF1)_k$),

- pour déterminer une deuxième réponse d'impulsion de canal ($h_2(\tau)$) sur la base d'un deuxième signa radio (RF2) reçu par le dispositif de réception (14) et la détermination à partir de la deuxième réponse d'impulsion de canal ($h_2(\tau)$) d'une deuxième séquence de deuxièmes composants de signal multivoie successifs dans le temps ($SC(RF2)_k$), le deuxième signal radio (RF2) étant émis par un premier appareil électronique mobile (6) d'un premier utilisateur (2), et

- pour déterminer un degré de similitude au moyen d'une évaluation de la première réponse d'impulsion de canal ($h_1(\tau)$) et de la deuxième réponse d'impulsion de canal ($h_2(\tau)$), le degré de similitude ($SD_s$, $SD_A$) indiquant à quel point la première réponse d'impulsion de canal ($h_1(\tau)$) et la deuxième réponse d'impulsion de canal ($h_2(\tau)$) sont similaires l'une à l'autre, l'évaluation des première et deuxième réponses d'impulsion de canal ($h_1(\tau)$, $h_2(\tau)$) comprenant une comparaison par paires, selon l'ordre de la première et de la deuxième séquence, de chaque deuxième composant de signal multivoie ($SC(RF2)_k$) avec son premier composant de signal multivoie ($SC(RF1)_k$) correspondant selon l'ordre, afin de déterminer pour chaque paire (P1, P2, P3, P4) un décalage temporel ($\Delta_k$) de sorte qu'il y ait un décalage temporel ($\Delta_k$) maximal et un décalage temporel ($\Delta_k$) minimal, le degré de similitude ($SD_s$, $SD_A$) étant basé sur au moins un de ces décalages temporels ($\Delta_k$) ;

le dispositif de commande (10, 11) étant conçu pour déclencher une action de bâtiment, lorsque, sur la base du degré de similitude, une règle définie est satisfaite, et

les signaux radio (RF1, RF2) ayant une largeur de bande d'au moins 500 MHz et étant émis et reçus conformément à une norme WLAN/WiFi ou à une norme pour une technologie de bande ultra-large.

11. Système (1) selon la revendication 10, dans lequel le premier signal radio (RF1) et le deuxième signal radio (RF2) ont une référence de temps commune, le dispositif de traitement de signaux (8) étant conçu :

pour déterminer une première distance ($d_1$), à laquelle le premier appareil mobile (6) du premier utilisateur (2) se trouve par rapport au dispositif d'émission (4), selon

$$d_1 = E_s \cdot c \cdot SD_s,$$

où : c est la vitesse de la lumière, $E_s = (K + 1)/K$ et $SD_s = max\{|\Delta_1|, ..., |\Delta_K|\}$ ; et

pour déclencher la réaction de bâtiment, lorsque la première distance ($d_1$) est inférieure ou égale à une distance minimale fixée.

12. Système (1) selon la revendication 10, dans lequel le premier signal radio (RF1) et le deuxième signal radio (RF2) n'ont aucune référence de temps commune, le dispositif de traitement de signaux (8) étant conçu :

pour déterminer une première distance ($d_1$), à laquelle le premier appareil mobile (6) du premier utilisateur (2) se trouve par rapport au dispositif d'émission (4), selon

$$d_1 = E_A \cdot c/2 \cdot SD_A,$$

où : c est la vitesse de la lumière, $E_A = (K + 1)/(K - 1)$ et

$$SD_A = (max\{\Delta_1, ..., \Delta_K\} - min\{\Delta_1, ..., \Delta_K\}) ;$$

et

pour déclencher la réaction de bâtiment, lorsque la première distance ($d_1$) est inférieure ou égale à une distance minimale fixée.

**Fig. 1**

**Fig. 2**

Fig. 3A

Fig. 3C

Fig. 3B

Fig. 3E

Fig. 3D

Fig. 3F

**Fig. 4**

Start — S1

Bestimme Kanalimpulsantwort $h_1(\tau)$
basierend auf Funksignal RF1 — S2

Bestimme Kanalimpulsantwort $h_2(\tau)$
basierend auf Funksignal RF2 — S3

Ermittle K Mehrwege-Signalkomponenten von $h_1(\tau)$
Ermittle K Mehrwege-Signalkomponenten von $h_2(\tau)$ — S4.1

Vergleiche paarweise K Mehrwege-Signalkomponenten
von $h_1(\tau)$ und $h_2(\tau)$
→ zeitliche Abweichung $\Delta_k$ für jedes Paar — S4.2

Bestimme Abstand
$d_1 = E_S \cdot c \cdot \max\{\,|\Delta_1|\,,\,...,\,|\Delta_K|\,\}$ — S4.3

Nein

Regel erfüllt? — S5

Ja

Veranlasse Gebäudeaktion — S6

Ende — S7

**Fig. 5**

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010112586 A1
- EP 3370464 A1
- WO 2017100706 A1
- WO 2016198548 A1
- WO 2015135630 A1


**In der Beschreibung aufgeführte Nicht-Patentliteratur**

- **B. H. FLEURY et al.** Channel parameter estimation in mobile radio environments using the SAGE algorithm. *IEEE Journal on selected areas in communications,* 1999, vol. 17 (3), 434-450

- **T. SANTOS ; J. KAREDAL ; P. ALMERS ; F. TUFVESSON ; A. MOLISCH.** Modeling the ultra wideband outdoor channel: Measurements and parameter extraction method. *IEEE Transactions on Wireless Communications,* 2010, vol. 9 (1), 282-290
- **ILL-KEUN RHEE et al.** Clock Synchronization in Wireless Sensor Network: An Overview. *Sensors,* 2009, vol. 9, 56-85